(19) Europäisches Patentamt
European Patent Office
Office européen des brevets

(11) **EP 4 675 947 A1**

(12) **EUROPEAN PATENT APPLICATION**
published in accordance with Art. 153(4) EPC

(43) Date of publication:
**07.01.2026 Bulletin 2026/02**

(21) Application number: **23927961.5**

(22) Date of filing: **20.03.2023**

(51) International Patent Classification (IPC):
**H04J 13/00** (2011.01)    **H04J 13/14** (2011.01)

(52) Cooperative Patent Classification (CPC):
**H04J 13/00; H04J 13/14**

(86) International application number:
**PCT/CN2023/082621**

(87) International publication number:
**WO 2024/192644 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen, Guangdong 518129 (CN)**

(72) Inventors:
• **FENG, Qi
Shenzhen, Guangdong 518129 (CN)**
• **WANG, Fan
Shenzhen, Guangdong 518129 (CN)**
• **ZHANG, Zhang
Shenzhen, Guangdong 518129 (CN)**
• **WEI, Dongdong
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD, COMMUNICATION APPARATUS, AND COMMUNICATION SYSTEM**

(57)    Embodiments of this application provide a communication method, a communication apparatus, and a communication system. The method may include: A first apparatus obtains a cyclic shift sequence, where the cyclic shift sequence includes a delay domain cyclic shift and a Doppler cyclic shift; and outputs the cyclic shift sequence, where the cyclic shift sequence is used to generate a random access signal or a sensing signal. According to embodiments of this application, a capacity of available sequences can be increased by performing cyclic shifts in delay domain and Doppler domain.

FIG. 4

**Description**

**TECHNICAL FIELD**

This application relates to the field of communication technologies, and in particular, to a communication method, a communication apparatus, and a communication system.

**BACKGROUND**

In wireless cellular mobile communication, a user terminal device may perform initial network access or transfer a short message service message by sending a random access signal. In a long term evolution (long term evolution, LTE) technology and a new radio (new radio, NR) technology, a Zadoff-Chu (ZC) sequence may be used to generate a random access signal sequence set. The sequence set is obtained by performing different cyclic shifts on a same original ZC sequence. Due to an ideal autocorrelation property of the ZC sequence, sequences with a same root sequence that are obtained by performing different cyclic shifts are orthogonal to each other. A downlink signal synchronization and uplink random access may be implemented by using a correlation of the ZC sequence, and pilot multiplexing may be implemented by using orthogonality of the ZC sequence. It may be understood that the ideal property of the ZC sequence is based on a premise that no Doppler shift exists between a transmit device and a receive device. However, actually, the Doppler shift affects the correlation property of the ZC sequence, affecting orthogonality of different sequences in a ZC sequence set. Therefore, to improve a capability of the ZC sequence in resisting a frequency offset, the cyclic shift of the ZC sequence is restricted, and a cyclic shift is selected from a restricted set of the ZC sequence, to resist a frequency offset of one or two subcarrier spacings. However, a sequence capacity is limited, and communication performance is affected.

**SUMMARY**

This application provides a communication method, a communication apparatus, and a communication system, to increase a capacity of available sequences.

According to a first aspect, this application provides a communication method, including: A first apparatus obtains a cyclic shift sequence. The cyclic shift sequence includes a delay domain cyclic shift and a Doppler cyclic shift. The first apparatus outputs the cyclic shift sequence.

In the foregoing method, when the first apparatus is a terminal device or a functional module (for example, a circuit or a chip) in the terminal device, a second apparatus is a network device or a functional module (for example, a circuit or a chip) in the network device; or when the first apparatus is a network device or a functional module (for example, a circuit or a chip) in the network device, the second apparatus is a terminal device or a functional module (for example, a circuit or a chip) in the terminal device.

For example, in some scenarios (for example, random access), when the first apparatus is the terminal device or the functional module (for example, the circuit or the chip) in the terminal device, the second apparatus is the network device or the functional module (for example, the circuit or the chip) in the network device. In some other scenarios (for example, sensing), when the first apparatus is the network device or the functional module (for example, the circuit or the chip) in the network device, the second apparatus may be the terminal device or the functional module (for example, the circuit or the chip) in the terminal device; or when the first apparatus is the terminal device or the functional module (for example, the circuit or the chip) in the terminal device, the second apparatus may be the terminal device or the functional module (for example, the circuit or the chip) in the terminal device. When the first apparatus is the network device or the functional module (for example, the circuit or the chip) in the network device, the second apparatus may be the network device or the functional module (for example, the circuit or the chip) in the network device.

According to this embodiment of this application, the cyclic shift sequence including the delay domain cyclic shift and the Doppler domain cyclic shift may be obtained, and a capacity of available sequences is increased by performing the delay domain cyclic shift and the Doppler domain cyclic shift, to provide communication performance.

In a possible implementation of the first aspect, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

It may be understood that more cyclic shift sequences may be obtained by performing different delay domain cyclic shifts and different Doppler domain cyclic shifts on the quadratic exponential sequence, to increase the capacity of available sequences.

In a possible implementation of the first aspect, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

By performing the delay domain cyclic shift and the Doppler domain cyclic shift, a peak of an ambiguity function of the cyclic shift sequence is within the zero ambiguity zone, that is, there is only one peak within the zero ambiguity zone. In addition, an ambiguity function between any two cyclic shift sequences with a same quadratic term coefficient is zero. In this way, the capacity of available sequences is increased. A low ambiguity zone may be formed between different quadratic term coefficients. A maximum value of the ambiguity function is the same as that of an existing quadratic exponential sequence: a square root of a sequence length.

In a possible implementation of the first aspect, an expression of a discrete-time signal of the quadratic exponential sequence is:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, ..., N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, k represents an index of the delay cyclic shift, $l$ represents an index of the Doppler cyclic shift, $\Delta_{\mathrm{T}}$ represents a preset maximum delay, and $\Delta_{\mathrm{F}}$ represents a preset maximum Doppler shift.

It should be noted that a zero ambiguity zone may be determined based on the maximum delay and the maximum Doppler, and the zero ambiguity zone is constructed by using the maximum Doppler, so that the capacity of available sequences can be increased.

In a possible implementation of the first aspect, a value of the sequence length is equal to a product of M mutually different prime numbers, where M is a positive integer. The quadratic exponential sequence includes sequences with the M mutually different prime numbers as quadratic term coefficients. The quadratic exponential sequence set includes G sequence sets obtained by separately performing delay domain cyclic shifts and Doppler domain cyclic shifts on the sequences with the M mutually different prime numbers as quadratic term coefficients, where G is a positive integer.

It can be learned that an upper bound of the sequence capacity is proportional to the mutually different prime numbers obtained through decomposition, and a sequence capacity of the zero ambiguity zone and a sequence capacity of the low ambiguity zone are increased.

In a possible implementation of the first aspect, when M is equal to 2, the sequence length is equal to a first prime number multiplied by a second prime number. The quadratic exponential sequence includes a first sequence with the first prime number as a quadratic term coefficient and a second sequence with the second prime number as a quadratic term coefficient. The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

It can be learned that when the sequence length is a product of two different prime numbers, a low ambiguity zone may be formed between two quadratic term coefficients, and the maximum value of the ambiguity function is $\sqrt{N}$.

In a possible implementation of the first aspect, when M is equal to 3, the sequence length is equal to a third prime number multiplied by a fourth prime number multiplied by a fifth prime number. The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient. The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

It can be learned that when the sequence length is a product of three different prime numbers, a low ambiguity zone is formed between any two quadratic term coefficients, so that the sequence capacity of the low ambiguity zone can be increased.

In a possible implementation of the first aspect, that the first apparatus obtains the cyclic shift sequence includes: determining the cyclic shift sequence based on the sequence length, the quadratic term coefficient, the preset maximum delay, and the preset maximum Doppler shift.

In a possible implementation of the first aspect, the cyclic shift sequence is used to generate a random access signal or a sensing signal.

In a random access scenario, uplink user access and delay estimation can be implemented by using a correlation between sequences. According to this embodiment of this application, more random access signals can be constructed, an ambiguity function between random access signals with a same quadratic term coefficient is zero, and a correlation between random access signals with different quadratic term coefficients is low, so that access of more users can be implemented.

In a sensing scenario, as sensing nodes like a vehicle radar are increasingly widely used, there are more sensing nodes, and the sensing nodes send more sensing signals. According to this embodiment of this application, more sensing signals can be constructed, an ambiguity function between sensing signals with a same quadratic term coefficient is zero, and a correlation between sensing signals with different quadratic term coefficients is low, so that mutual interference between sensing signals can be reduced when more objects are sensed.

According to a second aspect, an embodiment of this application provides a communication method, including:

A second apparatus receives a cyclic shift sequence. The cyclic shift sequence includes a delay domain cyclic shift and a Doppler cyclic shift. The second apparatus processes the cyclic shift sequence.

In a possible implementation of the second aspect, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In a possible implementation of the second aspect, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

In a possible implementation of the second aspect, an expression of a discrete-time signal of the quadratic exponential sequence is:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, ..., N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, k represents an index of the delay cyclic shift, $l$ represents an index of the Doppler cyclic shift, $\Delta_{\mathrm{T}}$ represents a preset maximum delay, and $\Delta_{\mathrm{F}}$ represents a preset maximum Doppler shift.

In a possible implementation of the second aspect, a value of the sequence length is equal to a product of $M$ mutually different prime numbers, where $M$ is a positive integer.

The quadratic exponential sequence includes sequences with the M mutually different prime numbers as quadratic term coefficients.

The quadratic exponential sequence set includes G sequence sets obtained by separately performing delay domain cyclic shifts and Doppler domain cyclic shifts on the sequences with the M mutually different prime numbers as quadratic term coefficients, where G is a positive integer.

In a possible implementation of the second aspect, when M is equal to 2, the sequence length is equal to a first prime number multiplied by a second prime number.

The quadratic exponential sequence includes a first sequence with the first prime number as a quadratic term coefficient and a second sequence with the second prime number as a quadratic term coefficient.

The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

In a possible implementation of the second aspect, when M is equal to 3, the sequence length is equal to a third prime number multiplied by a fourth prime number multiplied by a fifth prime number.

The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient.

The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

According to a third aspect, an embodiment of this application provides a communication system. The communication system includes a first apparatus and a second apparatus.

The first apparatus is configured to obtain a cyclic shift sequence, where the cyclic shift sequence includes a delay domain cyclic shift and a Doppler domain cyclic shift; and send the cyclic shift sequence to a network device. The second apparatus is configured to receive a cyclic shift sequence from a terminal device; and process the cyclic shift sequence.

In a possible implementation of the third aspect, the first apparatus may be a terminal device or a functional module (for example, a circuit or a chip) in the terminal device, or may be a network device or a functional module (for example, a circuit or a chip) in the network device. The second apparatus may be a terminal device or a functional module (for example, a circuit or a chip) in the terminal device, or may be a network device or a functional module (for example, a circuit or a chip) in the network device.

In a possible implementation of the third aspect, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In a possible implementation of the third aspect, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

In a possible implementation of the third aspect, an expression of a discrete-time signal of the quadratic exponential sequence is:

$$s_{u,k,l}(n) = e^{-j\pi[u(n+k\Delta_\mathrm{T})(n+k\Delta_\mathrm{T}+1)+2nl\Delta_\mathrm{F}]/N}, n = 0, 1, ..., N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, $k$ represents an index of the delay cyclic shift, $l$ represents an index of the Doppler cyclic shift, $\Delta_\mathrm{T}$ represents a preset maximum delay, and $\Delta_\mathrm{F}$ represents a preset maximum Doppler shift.

In a possible implementation of the third aspect, a value of the sequence length is equal to a product of $M$ mutually different prime numbers, where $M$ is a positive integer.

The quadratic exponential sequence includes sequences with the M mutually different prime numbers as quadratic term coefficients.

The quadratic exponential sequence set includes $G$ sequence sets obtained by separately performing delay domain cyclic shifts and Doppler domain cyclic shifts on the sequences with the $M$ mutually different prime numbers as quadratic term coefficients, where G is a positive integer.

In a possible implementation of the third aspect, when M is equal to 2, the sequence length is equal to a first prime number multiplied by a second prime number.

The quadratic exponential sequence includes a first sequence with the first prime number as a quadratic term coefficient and a second sequence with the second prime number as a quadratic term coefficient.

The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

In a possible implementation of the third aspect, when M is equal to 3, the sequence length is equal to a third prime number multiplied by a fourth prime number multiplied by a fifth prime number.

The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient.

The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

In a possible implementation of the third aspect, the first apparatus determines the cyclic shift sequence based on the sequence length, the quadratic term coefficient, the preset maximum delay, and the preset maximum Doppler shift.

In a possible implementation of the third aspect, the cyclic shift sequence is used to construct a random access signal or a sensing signal.

According to a fourth aspect, an embodiment of this application provides a communication apparatus. The communication apparatus may include modules or units that are in one-to-one correspondence with the methods/operations/steps/actions described in the first aspect. The module or unit may be a hardware circuit, software, or a combination of the hardware circuit and the software.

In a possible implementation of the fourth aspect, the communication apparatus includes a communication unit and a processing unit. The processing unit is configured to obtain a cyclic shift sequence. The cyclic shift sequence includes a delay domain cyclic shift and a Doppler domain cyclic shift. The communication unit is configured to output the cyclic shift sequence.

In a possible implementation of the fourth aspect, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In a possible implementation of the fourth aspect, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

In a possible implementation of the fourth aspect, an expression of a discrete-time signal of the quadratic exponential sequence is:

$$s_{u,k,l}(n) = e^{-j\pi[u(n+k\Delta_T)(n+k\Delta_T+1)+2nl\Delta_F]/N}, n = 0, 1, ..., N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, k represents an index of the delay cyclic shift, $l$ represents an index of the Doppler cyclic shift, $\Delta_T$ represents a preset maximum delay, and $\Delta_F$ represents a preset maximum Doppler shift.

In a possible implementation of the fourth aspect, a value of the sequence length is equal to a product of $M$ mutually different prime numbers, where $M$ is a positive integer. The quadratic exponential sequence includes sequences with the M mutually different prime numbers as quadratic term coefficients. The quadratic exponential sequence set includes G sequence sets obtained by separately performing delay domain cyclic shifts and Doppler domain cyclic shifts on the sequences with the M mutually different prime numbers as quadratic term coefficients, where $G$ is a positive integer.

In a possible implementation of the fourth aspect, when $M$ is equal to 2, the sequence length is equal to a first prime number multiplied by a second prime number.

The quadratic exponential sequence includes a first sequence with the first prime number as a quadratic term coefficient and a second sequence with the second prime number as a quadratic term coefficient.

The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

In a possible implementation of the fourth aspect, when $M$ is equal to 3, the sequence length is equal to a third prime number multiplied by a fourth prime number multiplied by a fifth prime number.

The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient.

The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

In a possible implementation of the fourth aspect, the processing unit is specifically configured to determine the cyclic shift sequence based on the sequence length, the quadratic term coefficient, the preset maximum delay, and the preset maximum Doppler shift.

In a possible implementation of the fourth aspect, the cyclic shift sequence is used to generate a random access signal or a sensing signal.

According to a fifth aspect, an embodiment of this application provides a communication apparatus. The communication apparatus includes a communication unit and a processing unit, and the communication apparatus is configured to implement the method according to any implementation of the second aspect.

In a possible implementation of the fifth aspect, the communication unit is configured to receive a cyclic shift sequence from a first communication apparatus. The cyclic shift sequence includes a delay domain cyclic shift and a Doppler domain cyclic shift.

The processing unit is configured to process the cyclic shift sequence.

In a possible implementation of the fifth aspect, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In a possible implementation of the fifth aspect, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

In a possible implementation of the fifth aspect, an expression of a discrete-time signal of the quadratic exponential sequence is:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, \ldots, N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, k represents an index of the delay cyclic shift, $l$ represents an index of the Doppler cyclic shift, $\Delta_{\mathrm{T}}$ represents a preset maximum delay, and $\Delta_{\mathrm{F}}$ represents a preset maximum Doppler shift.

In a possible implementation of the fifth aspect, a value of the sequence length is equal to a product of $M$ mutually different prime numbers, where $M$ is a positive integer. The quadratic exponential sequence includes sequences with the $M$ mutually different prime numbers as quadratic term coefficients. The quadratic exponential sequence set includes $G$ sequence sets obtained by separately performing delay domain cyclic shifts and Doppler domain cyclic shifts on the sequences with the M mutually different prime numbers as quadratic term coefficients, where $G$ is a positive integer.

In a possible implementation of the fifth aspect, when $M$ is equal to 2, the sequence length is equal to a first prime number multiplied by a second prime number. The quadratic exponential sequence includes a first sequence with the first prime number as a quadratic term coefficient and a second sequence with the second prime number as a quadratic term coefficient. The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

In a possible implementation of the fifth aspect, when M is equal to 3, the sequence length is equal to a third prime number multiplied by a fourth prime number multiplied by a fifth prime number.

The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient.

The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

According to a sixth aspect, an embodiment of this application provides a communication apparatus. The communication apparatus includes a processor. The processor is configured to cause the communication apparatus to implement the method according to any implementation of the first aspect or the method according to any implementation of the second aspect by executing instructions stored in a memory or by running a logic circuit.

In a possible implementation, the communication apparatus further includes a communication interface. The communication interface is configured to receive and/or send data, and/or the communication interface is configured to provide input and/or output for the processor.

In a possible implementation, the communication apparatus further includes a memory. The memory is configured to store at least one of the instructions, a configuration file of the logic circuit, and data. Optionally, the processor and the memory may be further integrated into one device, that is, the processor and the memory may be further integrated together.

In the foregoing embodiment, the processor (or referred to as a general-purpose processor) that performs the method by invoking computer instructions is used as an example for description. In a specific implementation process, the processor may alternatively be a dedicated processor. In this case, the computer instructions are already pre-loaded on the processor. Optionally, the processor may alternatively include both a dedicated processor and a general-purpose processor.

According to a seventh aspect, an embodiment of this application provides a computer-readable storage medium. The computer-readable storage medium stores instructions. When the instructions are run on at least one processor, the method according to any implementation of the first aspect or the method according to any implementation of the second aspect is implemented.

According to an eighth aspect, this application provides a computer program product. The computer program product includes computer instructions. When the instructions are run on at least one processor, the method according to any implementation of the first aspect or the method according to any implementation of the second aspect is implemented.

Optionally, the computer program product may be a software installation package or an image package. When the foregoing method needs to be used, the computer program product may be downloaded, and the computer program product is executed on a computing device.

According to a ninth aspect, this application provides a chip system. The chip system includes at least one processor, a memory, and an interface circuit. The memory, the interface circuit, and the at least one processor are interconnected through a line. The at least one memory stores a computer program. When the computer program is executed by the processor, the method according to any implementation of the first aspect or the method according to any implementation of the second aspect is implemented.

For beneficial effects of the technical solutions provided in the second aspect to the ninth aspect of this application, refer to the beneficial effects of the technical solutions in the first aspect. Details are not described herein again.

## BRIEF DESCRIPTION OF DRAWINGS

The following briefly describes accompanying drawings used in describing embodiments.

FIG. 1 is a diagram of a structure of a communication system according to an embodiment of this application;

FIG. 2 is a diagram of simulation of an ambiguity function of a Zadoff-Chu sequence using a correlation property according to an embodiment of this application;

FIG. 3 is a diagram of simulation of an ambiguity function of an extended Zadoff-Chu sequence using an ambiguity property according to an embodiment of this application;

FIG. 4 is a schematic flowchart of a communication method according to an embodiment of this application;

FIG. 5 is a diagram of an ambiguity function of a cyclic shift sequence according to an embodiment of this application;

FIG. 6(a) and FIG. 6(b) are a diagram of simulation of an ambiguity function of a cyclic shift sequence according to an embodiment of this application;

FIG. 7A is a diagram of side lobes appearing within a zero ambiguity zone according to an embodiment of this application;

FIG. 7B is a diagram of a receive window function according to an embodiment of this application;

FIG. 7C(a) to FIG. 7C(c) are a diagram of suppressing a Doppler side lobe by using different roll-off factors according to an embodiment of this application;

FIG. 7D(a) and FIG. 7D(b) are a diagram of comparison between ambiguity functions of two sequences according to an embodiment of this application;

FIG. 8(a) and FIG. 8(b) are a diagram of an ambiguity function of a cyclic shift sequence whose sequence length is a product of two prime numbers according to an embodiment of this application;

FIG. 9(a) to FIG. 9(C) are a diagram of an ambiguity function of a cyclic shift sequence whose sequence length is a product of three prime numbers according to an embodiment of this application;

FIG. 10 is a diagram of a structure of a communication apparatus according to an embodiment of this application; and

FIG. 11 is a diagram of a structure of a communication apparatus according to an embodiment of this application.

## DESCRIPTION OF EMBODIMENTS

The following describes embodiments of this application with reference to the accompanying drawings in embodiments of this application.

The technical solutions provided in this application may be applied to various communication systems, for example, a 5th generation (5th Generation, 5G) mobile communication system like a long term evolution (long term evolution, LTE) system, an LTE frequency division duplex (frequency division duplex, FDD) system, an LTE time division duplex (time division duplex, TDD) system, and a new radio (new radio, NR) system, and a system evolved after 5G, for example, a 6th generation (6th Generation, 6G) mobile communication system or an integrated sensing and communication system.

The technical solutions provided in this application may be further applied to machine type communication (machine type communication, MTC), a long term evolution technology for machine-to-machine communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, X can stand for anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. A V2X communication system is a sidelink (sidelink, SL) transmission technology based on D2D communication.

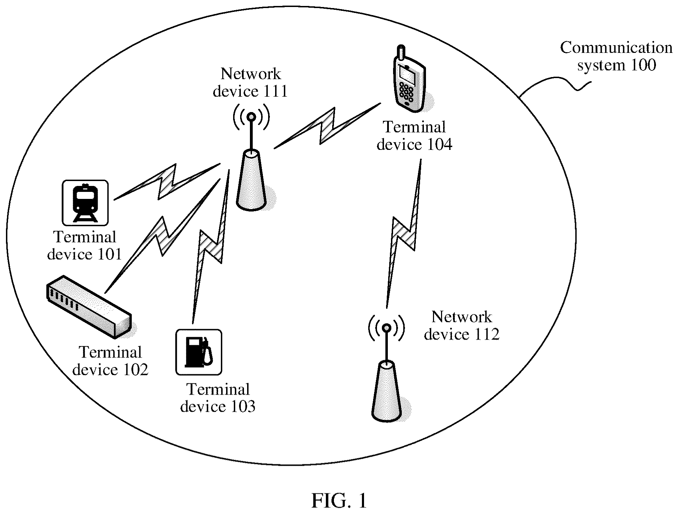

To better understand a communication method, an apparatus, and a system provided in embodiments of this application, the following first describes the communication system used in embodiments of this application. FIG. 1 is a diagram of a structure of a communication system 100 according to an embodiment of this application. The communication system 100 includes a network device 111, a network device 112, a terminal device 101, a terminal device 102, a terminal device 103, and a terminal device 104. It should be understood that the communication system 100 may include more or fewer network devices and more or fewer terminal devices. The network device and the terminal device may be hardware, or software obtained through function division, or a combination thereof. The network device 111 and the network device 112 may communicate with the terminal device 101 to the terminal device 104 via another device or network element. In the system, the network device 111 and the network device 112 may perform data transmission with the plurality of terminal devices: the terminal device 101 to the terminal device 104. For example, the network device 111 sends downlink data to the terminal device 101 to the terminal device 104, and the terminal device 101 to the terminal device 104 may also send uplink data to the network device 111. In addition, the terminal device 101, the terminal device 102, the terminal device 103, and the terminal device 104 may also form a communication system. In the system, the network device 111 may send downlink data to the terminal device 101 and the terminal device 104, and the terminal device 104 sends the downlink data to the terminal device 102 or the terminal device 103. The terminal device 101 and the terminal device 104 may also send uplink data to the network device 111. The method in embodiments of this application may be applied to the communication system 100 shown in FIG. 1.

(1) The terminal device includes a device that provides voice and/or data connectivity for a user. For example, the terminal device may include a processing device connected to a wireless modem. The terminal device may communicate with a core network via a radio access network (radio access network, RAN), and exchange a voice or data with the RAN, or exchange a voice and data with the RAN. The terminal device may include a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a palmtop computer, a wireless modem (modem), a handheld device (handheld), a laptop computer (laptop computer), a cordless telephone (cordless phone) or a wireless local loop (wireless local loop, WLL) station, a machine type communication (machine type communication, MTC) terminal, a wearable device (for example, a smart watch, a smart band, and a pedometer), a vehicle-mounted device (for example, a car, a bicycle, an electric vehicle, an airplane, a ship, a train, and a high-speed railway), a vehicle to everything (vehicle to everything, V2X) terminal device, a machine-to-machine/machine type communication (machine-to-machine/machine type communication, M2M/MTC) terminal device, an internet of things (internet of things, IoT) terminal device, a light terminal device (light UE), a reduced capability terminal device (reduced capability UE, REDCAP UE), a point of sale (point of sale, POS) machine, a customer-premises equipment (customer-premises equipment, CPE), a mobile internet device (mobile internet device, MID), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an uncrewed aerial vehicle, or an airplane), or another device that can access a network.

In embodiments of this application, the terminal device may further include a relay (relay). Alternatively, it is understood as that any device that can perform data communication with a network device (for example, a base station) may be considered as a terminal device.

In embodiments of this application, an apparatus configured to implement a function of the terminal device may be a terminal device, or may be an apparatus that can support the terminal device in implementing the function, for example, a chip system. The apparatus may be mounted in the terminal device. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(2) The network device is a node in a radio access network (radio access network, RAN), and may also be referred to as an access network device, or may also be referred to as a RAN node (or device). The network device is configured to help the terminal implement radio access. A plurality of network devices in the communication system 100 may be nodes of a same type, or may be nodes of different types.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a base station in a 6G mobile communication system, a base station or a satellite in a future mobile communication system, an access node, an integrated access and backhaul (integrated access and backhaul, IAB) node, a transmission point (transmission point, TP), or a mobile switching center in a Wi-Fi system, and a device that functions as a base station in D2D, V2X, M2M, or uncrewed aerial vehicle communication, or the like. The network device may be a macro base station, a micro base station, an indoor base station, a relay node, a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of the software module and the hardware module.

The network device may further include a core network device, which is a device in a core network (core network, CN) that provides service support for the terminal device. The core network device may be an access and mobility management function (access and mobility management function, AMF) network element, a session management function (session management function, SMF) network element, a user plane function (user plane function, UPF) network element, or the like, which are not listed one by one herein. The AMF network element may be responsible for access management and mobility management of the terminal device. The SMF network element may be responsible for session management, for example, session establishment of a user. The UPF network element may be a user plane functional entity, and is mainly responsible for connecting to an external network. It should be noted that the network element in this application may also be referred to as an entity or a functional entity. For example, the AMF network element may also be referred to as an AMF entity or an AMF functional entity. For another example, the SMF network element may also be referred to as an SMF entity, an SMF functional entity, or the like.

In embodiments of this application, an apparatus configured to implement a function of the network device may be a network device, or may be an apparatus that can support the network device in implementing the function, for example, a chip system. The apparatus may be mounted in the network device.

For ease of understanding, some concepts related to embodiments of this application are described below for reference by using examples. Details are as follows.

1. A Zadoff-Chu sequence, referred to as a ZC sequence for short, is a sequence generated through a phase change. The ZC sequence varies depending on whether a sequence length $N_{ZC}$ is an odd number or an even number. An expression of the ZC sequence may be in the following form:

$$s_u(n) = \begin{cases} e^{-j\pi u \cdot n(n+1)/N_{ZC}}, N_{ZC} \text{ is an odd number} \\ e^{-j\pi u \cdot n^2/N_{ZC}}, N_{ZC} \text{ is an even number} \end{cases}, n = 0, 1, \dots, N_{ZC} - 1$$

where $N_{ZC}$ is the length of the Zadoff-Chu sequence and is an integer greater than 1, a root index (root index) $u = 1$, 2, ..., $N_{ZC} - 1$, and the root index $u$ and the sequence length $N_{ZC}$ are mutually prime.

The Zadoff-Chu sequence has the following properties:

(1) The sequence is a periodic sequence, and a periodicity of the sequence is equal to the sequence length $N_{ZC}$, that is, $s_u(n \pm N_{ZC}) = s_u(n)$.
(2) The sequence has a constant amplitude value, and the amplitude value is 1, that is, $|s_u(n)| = 1$.
(3) A sequence obtained through discrete Fourier transform (discrete Fourier transform, DFT) is still a constant-amplitude sequence, and the sequence may be obtained by performing a weighted shift on an original Zadoff-Chu sequence, to omit a DFT operation.

(4) The ZC sequence has an ideal correlation property. A correlation value between two Zadoff-Chu sequences obtained by performing different cyclic shifts on a Zadoff-Chu sequence with a same root index is 0, or the two Zadoff-Chu sequences are orthogonal to each other. For any Zadoff-Chu sequences with different root indexes (for example, $u_1$ and $u_2$), when $|u_1-u_2|$ and the sequence length $N_{ZC}$ are mutually prime, an amplitude of a correlation value between the sequences is a fixed value.

The Zadoff-Chu sequence is widely used in a communication system because of the foregoing specific properties. Examples are as follows:

(1) A signal of the Zadoff-Chu sequence has a low peak-to-average power ratio due to the constant amplitude property of the Zadoff-Chu sequence, so that efficiency of a device power amplifier can be improved.
(2) The ideal correlation property of the Zadoff-Chu sequence is used for synchronization, timing estimation, ranging, and signal sensing.
(3) The ideal correlation property of the Zadoff-Chu sequence is used as a signature (signature) sequence or a preamble (preamble) for user identification, cell identification, or beam identification.

2. Quadratic exponential sequence

The quadratic exponential sequence is a sequence in which an order of a highest-order item in exponential factors is 2, and may not be subject to the constraint that the root index in the Zadoff-Chu sequence and the sequence length are mutually prime. In the quadratic exponential sequence, a quadratic term coefficient (corresponding to the root index in the Zadoff-Chu sequence) and the sequence length may be or not be mutually prime. Therefore, some quadratic exponential sequences also have the properties of the Zadoff-Chu sequence.

3. Doppler shift

When a vibration source like sound, light, or a radio wave moves relative to an observer at a relative velocity, a frequency of vibration received by the observer is different from a frequency provided by the vibration source. This phenomenon is referred to as a Doppler effect. A frequency change caused by the Doppler effect is referred to as a Doppler shift, which is proportional to the relative velocity and proportional to the vibration frequency.

4. Zero ambiguity zone/Low ambiguity zone

For a transmission signal whose duration is $T$ and bandwidth is $B$, an ambiguity function of the transmission signal is usually defined in delay (delay)-Doppler (Doppler) domain with a delay range of 0 to $T$ and a Doppler shift range of $-B/2$ to $B/2$. Therefore, the ambiguity function essentially refers to an output response of a matched transmit signal filter through which a signal (on which a delay and a Doppler shift are performed) received by a receive end passes. If a signal having an extremely low ambiguity function value exists in a zone of the delay (delay)-Doppler (Doppler) domain, the zone is referred to as a low ambiguity zone (low ambiguity zone, LAZ). If a signal having a zero ambiguity function value exists in another zone of the delay (delay)-Doppler (Doppler) domain, the zone is referred to as a zero ambiguity zone (zero ambiguity zone, ZAZ).

5. Maximum delay $\Delta_T$ and maximum Doppler shift $\Delta_F$

Within a zone (for example, a first zone), ranges between different sending devices and a receiving device may be different, and delays of signals arriving at the receiving device are also different. Therefore, a maximum value of round-trip transmission delays that may be corresponding to the sending devices within the first zone needs to be considered for a delay domain cyclic shift. Therefore, the maximum delay $\Delta_T$ may be determined based on a radius of the first zone.

It may be further understood that movement of the sending device relative to the receiving device causes a Doppler shift, and different moving velocities of the sending devices also cause different Doppler shifts. When the moving velocity of the sending device increases, the Doppler shift also increases accordingly. Therefore, a maximum Doppler shift that may be corresponding to the sending devices within the first zone needs to be considered for a Doppler domain cyclic shift. Therefore, the maximum Doppler shift $\Delta_F$ is determined based on a possible maximum moving velocity of the sending devices within the first zone.

The first zone may be a cell, a sensing zone, or the like.

For example, in a communication system, a zone covered by an access network device or a part of the zone covered by the access network device is referred to as a cell, or is referred to as a cellular cell. Because ranges between different terminals and the access network device are different, delays of signals arriving at the access network device are also different. Therefore, a maximum value of round-trip transmission delays that may be corresponding to the terminals within the cell needs to be considered for a delay domain cyclic shift. Therefore, the maximum delay $\Delta_T$ may be determined based on a radius of the cell.

It may be further understood that movement of the terminal causes a Doppler shift, and different moving velocities of the terminals also cause different Doppler shifts. When a moving velocity of a user increases, the Doppler shift also increases accordingly. Therefore, a maximum Doppler shift that may be corresponding to the terminals within the cell needs to be considered for a Doppler domain cyclic shift. Therefore, the maximum Doppler shift $\Delta_F$ is determined based on a possible maximum moving velocity of the terminals within the cell.

It can be learned from the foregoing analysis that Zadoff-Chu sequences with a same root index but different cyclic shifts are orthogonal to each other to form a zero correlation zone. Different cyclic shifts are performed on a Zadoff-Chu sequence with a same root index to obtain Zadoff-Chu sequences that are orthogonal to each other, which may be used to implement uplink access, delay estimation, and signal sensing, to obtain, through measurement, a range between a terminal device and a base station.

An expression of a discrete-time signal of the Zadoff-Chu sequence $s_{u,k}(n)$ using the correlation property may be expressed in the following form:

$$s_{u,k}(n) = e^{-j\pi u(n+k\Delta_T)(n+k\Delta_T+1)/N_{ZC}}, n = 0, 1, ..., N_{ZC}-1 \quad (1.1)$$

In the formula (1.1), the sequence length $N_{ZC}$ is a prime number, the root index u = 1, 2, ..., $N_{ZC}$- 1, the zero correlation zone represents $\Delta_T$, $\Delta_T$ represents a maximum delay, and a cyclic shift index $k = 0, 1, ..., \lfloor N_{ZC}/\Delta_T \rfloor - 1$. A symbol "$\lfloor \ \rfloor$" represents rounding down.

A Zadoff-Chu sequence set may be obtained by performing different cyclic shifts on the Zadoff-Chu sequence with a same root index shown in the formula (1.1). The Zadoff-Chu sequence set includes $\lfloor N_{ZC}/\Delta_T \rfloor$ Zadoff-Chu sequences:

$s_{u,0}(n), s_{u,1}(n), ..., and \ s_{u,\lfloor N_{ZC}/\Delta_T \rfloor - 1}(n)$. The sequences in the Zadoff-Chu sequence set are orthogonal to each other, and may form a zero correlation zone, to multiplex a given physical random access channel (physical random access channel, PRACH) resource.

However, when a Doppler shift exists, a frequency offset causes a cyclic shift of a signal based on the Zadoff-Chu sequence shown in the formula (1.1), affecting the correlation of the Zadoff-Chu sequence. When the frequency offset is serious, one Zadoff-Chu sequence may overlap with another Zadoff-Chu sequence, increasing a probability of misjudgment and reducing a quantity of available Zadoff-Chu sequences. In addition, a shift of a received signal deviates from a shift of an original sending signal, affecting detection of the receive end and deteriorating performance.

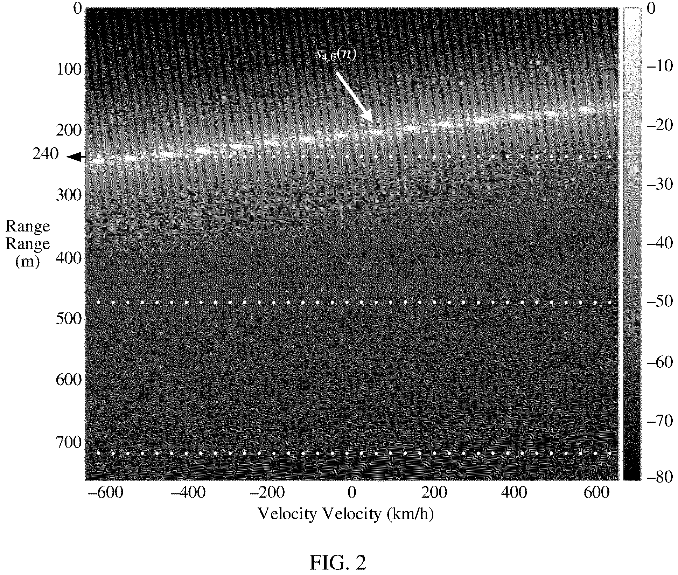

FIG. 2 is a diagram of simulation an ambiguity function of a Zadoff-Chu sequence using a correlation property according to an embodiment of this application. According to the formula (1.1), a Zadoff-Chu sequence $s_{4,0}(n)$ whose root index is 4 may be obtained. It can be learned from FIG. 2 that, when a Doppler shift exists, a signal cyclic shift is caused to the Zadoff-Chu sequence $s_{4,0}(n)$ whose root index is 4. Therefore, an ambiguity function of the Zadoff-Chu sequence $s_{4,0}(n)$ whose root index is 4 has a plurality of peaks within a range scope of 0 to 240. The peak is a white bright spot shown in FIG. 2. That is, the Zadoff-Chu sequence whose root index is 4 no longer has an ideal correlation property, and a correlation value between Zadoff-Chu sequences with different cyclic shifts may not be 0. When the correlation value is large, a receive end may obtain incorrect delay estimation. Therefore, the Doppler shift affects detection performance of a random access signal or sensing performance of a sensing signal based on a Zadoff-Chu sequence.

To improve a capability of resisting the Doppler shift, the cyclic shift of the Zadoff-Chu sequence may be restricted, and a cyclic shift is selected from a restricted set to achieve purposes of measuring the delay and resisting Doppler.

In addition, the Zadoff-Chu sequence may be periodically repeated to obtain an extended Zadoff-Chu sequence, and a zero ambiguity zone is constructed by using a delay domain cyclic shift. An expression of a discrete-time signal of the extended Zadoff-Chu sequence may be as follows:

$$s_{N_F,k}(n) = e^{-j\pi N_F(n+k\Delta_T)(n+k\Delta_T+1)/N}, n = 0, 1, ..., N-1 \quad (2.1)$$

In the formula (2.1), $N$ represents a length of the extended Zadoff-Chu sequence, a value is a composite number, $N_T$ represents a length of a single Zadoff-Chu sequence, $N_F$ represents a quantity of periodic repetitions of the extended Zadoff-Chu sequence, the quantity $N_F$ of periodic repetitions is exactly divided by the length $N = N_F N_T$ of the extended

Zadoff-Chu sequence, $\Delta_T$ represents a maximum delay in a delay range, and a cyclic shift index $k = 0, 1, ..., \lfloor N_T / \Delta_T \rfloor - 1$.

An extended Zadoff-Chu sequence set may be obtained by performing different cyclic shifts on the sequence shown in the formula (2.1). The extended Zadoff-Chu sequence set includes $\lfloor N_T / \Delta_T \rfloor$ extended Zadoff-Chu sequences:

$s_{NF,0}(n), s_{NF,1}(n), ...,$ and $s_{N_F, \lfloor N_T / \Delta_T \rfloor - 1}(n)$. In addition, a zero ambiguity zone may be formed between the $\lfloor N_T / \Delta_T \rfloor$ sequences, to multiplex a given PRACH resource.

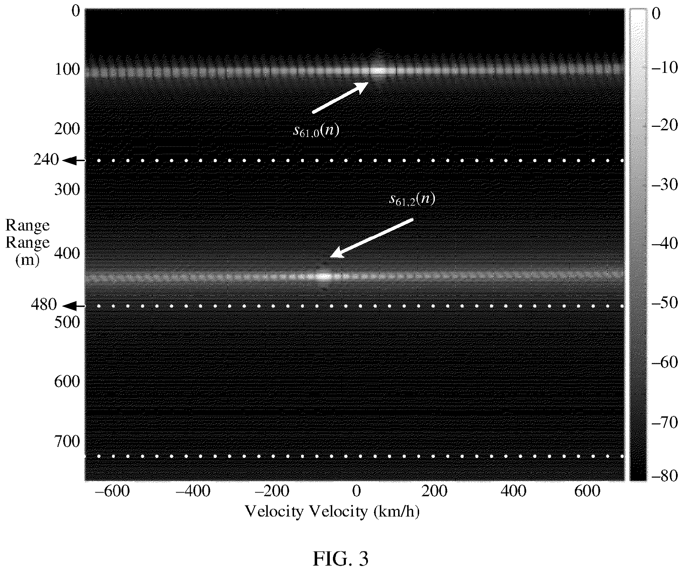

When a Doppler shift exists, because a delay domain cyclic shift is used in the formula (2.1), an ambiguity function of the extended Zadoff-Chu sequence shown in the formula (2.1) has only a single peak within a specific delay interval. FIG. 3 is a diagram of simulation of an ambiguity function of an extended Zadoff-Chu sequence using an ambiguity property according to an embodiment of this application. According to the formula (2.1), two extended Zadoff-Chu sequences $s_{61,0}$ (n) and $s_{61,2}$(n) whose quantities of periodic repetitions are 61 may be obtained. It can be learned from FIG. 3 that an ambiguity function of the extended Zadoff-Chu sequence $s_{61,0}(n)$ whose quantity of periodic repetitions is 61 has one peak within a delay range of 0 to 240, and an ambiguity function of the extended Zadoff-Chu sequence $s_{61,2}(n)$ also has one peak within a delay range of 240 to 480. Therefore, $s_{61,0}(n)$ and $s_{61,2}(n)$ are orthogonal to each other. However, for an extended Zadoff-Chu sequence using a cyclic shift sequence in delay domain, division is performed only in delay domain to construct a zero ambiguity zone, and the zero ambiguity zone cannot be constructed based on a maximum Doppler shift. Consequently, there are few available extended Zadoff-Chu sequences, and a sequence capacity is limited.

Therefore, to simultaneously observe ranges and velocities by using a plurality of sequences, in this application, a delay domain cyclic shift and a Doppler domain cyclic shift are performed on a quadratic exponential sequence with a same quadratic term coefficient by using a property of a zero ambiguity zone of the quadratic exponential sequence, to construct more zero ambiguity zones, so as to increase the sequence capacity.

The following describes in detail the method in embodiments of this application.

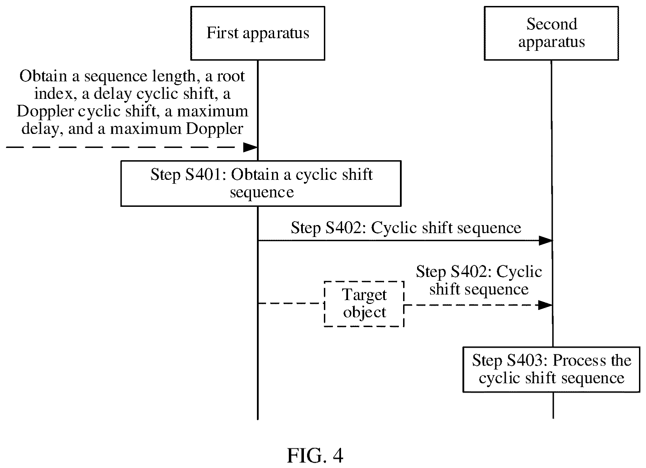

FIG. 4 is a schematic flowchart of a communication method according to an embodiment of this application. Optionally, the method may be applied to the foregoing communication system, for example, the communication system described in the implementation in FIG. 1.

The communication method shown in FIG. 4 may include one or more of step S401 to step S403. It should be understood that, for ease of description in this application, an execution time point, a quantity of execution times, and the like of the foregoing one or more step are not limited in embodiments of this application.

In the communication method shown in FIG. 4, a first apparatus and a second apparatus may be terminal devices, or communication units, components, or chips in the terminal devices, or apparatuses that are used in cooperation with the terminal devices. Alternatively, the first apparatus and the second apparatus may be network devices, or communication units, components, or chips in the network devices, or apparatuses that are used in cooperation with the network devices.

Step S401 to step S403 are specifically as follows.

Step S401: The first apparatus obtains a cyclic shift sequence. The cyclic shift sequence includes a delay domain cyclic shift and a Doppler cyclic shift.

In a possible implementation, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In another possible implementation, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set. When a quantity of cyclic shift sequences generated by using a same quadratic term coefficient cannot meet a requirement on a total quantity of users needing to be supported, a cyclic shift sequence generated by using a different quadratic term coefficient may be added.

In a possible implementation, an expression of a discrete-time signal of the cyclic shift sequence based on the quadratic exponential sequence is as follows:

$$s_{u,k,l}(n) = e^{-j\pi[u(n+k\Delta_T)(n+k\Delta_T+1)+2nl\Delta_F]/N}, n = 0, 1, ..., N-1 \quad (3.1)$$

In the formula (3.1), $s_{u,k,l}(n)$ is the quadratic exponential sequence, $N$ represents a sequence length, the sequence length is a composite number, u represents a quadratic term coefficient, the quadratic term coefficient includes a prime factor of the sequence length, $k$ represents an index of the delay cyclic shift, $l$ represents an index of the Doppler cyclic shift, $\Delta_T$ represents a preset maximum delay, and $\Delta_F$ represents a preset maximum Doppler shift.

In a possible implementation, the first apparatus obtains sequence configuration information. The sequence configuration information includes one or more of the following parameters: the sequence length $N$, an available quadratic term coefficient, a delay domain cyclic shift set and a Doppler domain cyclic shift set that are corresponding to each quadratic term coefficient, a maximum delay $\Delta_T$ in a first zone, and a maximum Doppler shift $\Delta_F$ in the first zone. The first zone may be a cell, a sensing zone, or the like. Then, the first apparatus selects a quadratic term coefficient $u$, selects a delay cyclic shift index $k$ and a Doppler cyclic shift index $l$ from a delay domain cyclic shift set and a Doppler domain cyclic shift set that are corresponding to the quadratic term coefficient u, and may obtain the cyclic shift sequence $s_{u,k,l}(n)$ by performing the delay cyclic shift and the Doppler cyclic shift.

In a possible implementation, the first apparatus receives the sequence configuration information. Optionally, the sequence configuration information may be sent by the second apparatus, or the sequence configuration information is sent by another apparatus.

In a possible implementation, the sequence configuration information is predefined, for example, predefined in a standard protocol.

In a possible implementation, the sequence configuration information is determined by the first apparatus. Optionally, the first apparatus further sends the sequence configuration information to the second apparatus.

The delay cyclic shift index k may also be referred to as a large-scale cyclic shift index. A phase change caused by a cyclic shift of the delay cyclic shift index k is equal to a multiple of the quadratic term coefficient u of the sequence, and does not exceed the sequence length $N$. Therefore, in a possible design, the delay cyclic shift index

$$k = 0, 1, ..., \lfloor N/u\Delta_T \rfloor - 1 .$$

The Doppler cyclic shift index $l$ may also be referred to as a small-scale cyclic shift index, and means that a phase change caused by a cyclic shift does not exceed the quadratic term coefficient u of the sequence. Therefore, in a possible design, the Doppler cyclic shift index $l = 0, 1, ..., \lfloor u/\Delta_F \rfloor - 1 .$

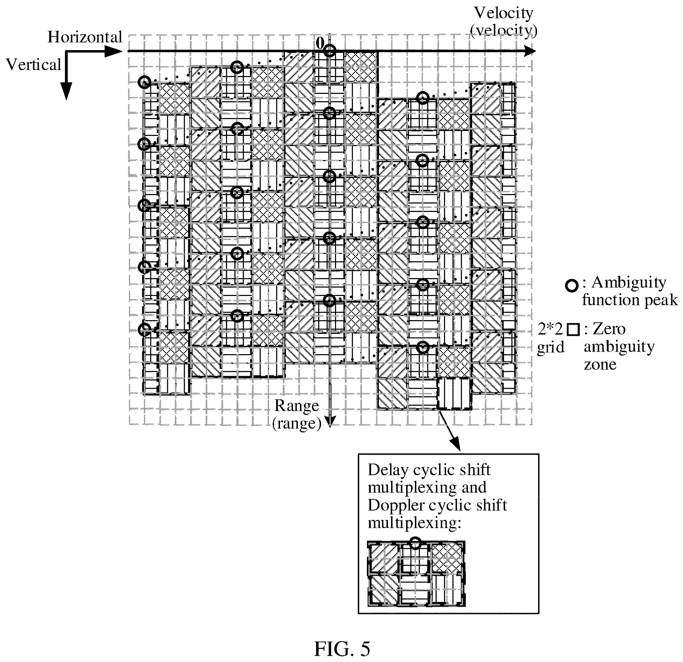

FIG. 5 is a diagram of an ambiguity function of a cyclic shift sequence according to an embodiment of this application. The ambiguity function shown in FIG. 5 is an ambiguity function of the quadratic exponential sequence set obtained based on the formula (3.1). The quadratic exponential sequence set is obtained by performing $k$ delay domain cyclic shifts and $l$ Doppler domain cyclic shifts that are of a same quadratic term coefficient on the quadratic exponential sequence shown in the formula (3.1).

It can be learned from FIG. 5 that a horizontal direction represents a velocity (Velocity), and a vertical direction represents a range (Range). When no cyclic shift is considered, a peak position of the ambiguity function may be determined based on the sequence length $N$ and the quadratic term coefficient $u$, and a circle represents the peak position of the ambiguity function. Because the sequence length $N$ in the formula (3.1) is a composite number, the sequence length N may be decomposed into a product of a plurality of prime numbers, the quadratic term coefficient $u$ is a prime factor of the sequence length $N$, and a phase change caused by the delay cyclic shift $k$ is a multiple of the quadratic term coefficient $u$. Therefore, a peak position of an ambiguity function of each cyclic shift sequence obtained according to the formula (3.1) is periodic, a peak may appear at any range coordinate, and a peak may appear at a specific velocity coordinate.

To increase a sequence capacity, a delay domain cyclic shift and a Doppler domain cyclic shift are performed. A sequence may be multiplexed by performing the delay domain cyclic shift and the Doppler domain cyclic shift, to obtain more available sequences. A zero ambiguity zone $\Delta_T \times \Delta_F$ may be determined based on the maximum delay $\Delta_T$ and the maximum Doppler shift $\Delta_F$. When $\Delta_T = 2$ and $\Delta_F = 2$, a $2\times2$ grid shown in FIG. 5 is a zero ambiguity zone. After the delay domain cyclic shift and the Doppler domain cyclic shift that are of the same quadratic term coefficient are performed according to the formula (3.1), the cyclic shift sequence can be multiplexed. It can be learned from FIG. 4 that when the delay domain cyclic shift index is 2 and the Doppler domain cyclic shift index is 3, a total of six cyclic shifts can be multiplexed. An ambiguity function of a cyclic shift sequence obtained by multiplexing a sequence by using a property of the zero ambiguity zone has only one peak within each zero ambiguity zone $\Delta_T \times \Delta_F$ (the peak is not completely shown in FIG. 4). A sequence capacity of the zero ambiguity zone is $\lfloor N/u\Delta_T \rfloor \lfloor u/\Delta_F \rfloor$, and adjacent zero ambiguity zones $\Delta_T \times \Delta_F$ do not overlap.

It can be further learned from FIG. 5 that, compared with an extended Zadoff-Chu sequence on which only a delay domain cyclic shift is performed, a delay domain cyclic shift and a Doppler domain delay shift may be performed on a quadratic exponential sequence to construct more zero ambiguity zones, and an available quantity of the quadratic exponential sequence is increased, to increase the sequence capacity.

When the sequence length $N = 7747$, the quadratic term coefficient $u = 61$, and a zero ambiguity zone determined based on cell information is: $\Delta_T \times \Delta_F = 40 \times 10$, the delay domain cyclic shift $k = 0, 1, ..., \lfloor N/u\Delta_T \rfloor - 1 = 0, 1, 2$ and the Doppler domain cyclic shift $l = 0, 1, ..., \lfloor u/\Delta_F \rfloor - 1 = 0, 1, ..., 5$ may be obtained. Therefore, 18 cyclic shift sequences may be obtained by performing, according to the formula (3.1), the delay domain cyclic shift and the Doppler domain cyclic shift on the quadratic exponential sequence whose sequence length $N$ is 7747 and whose quadratic term coefficient u is 61.

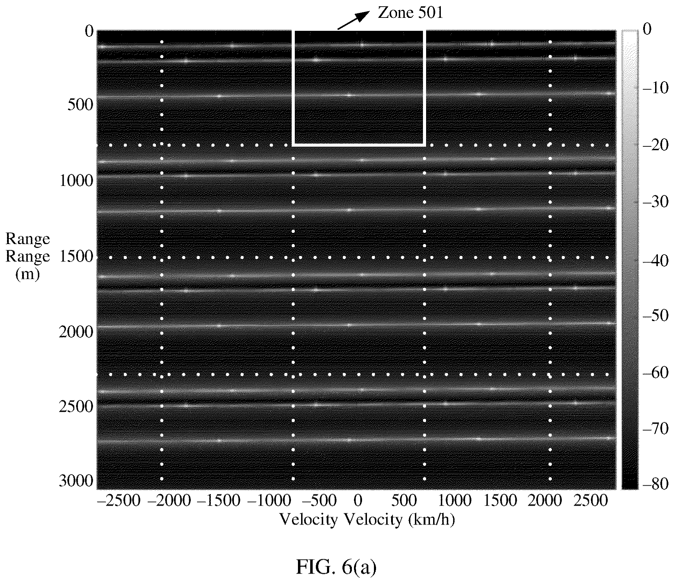

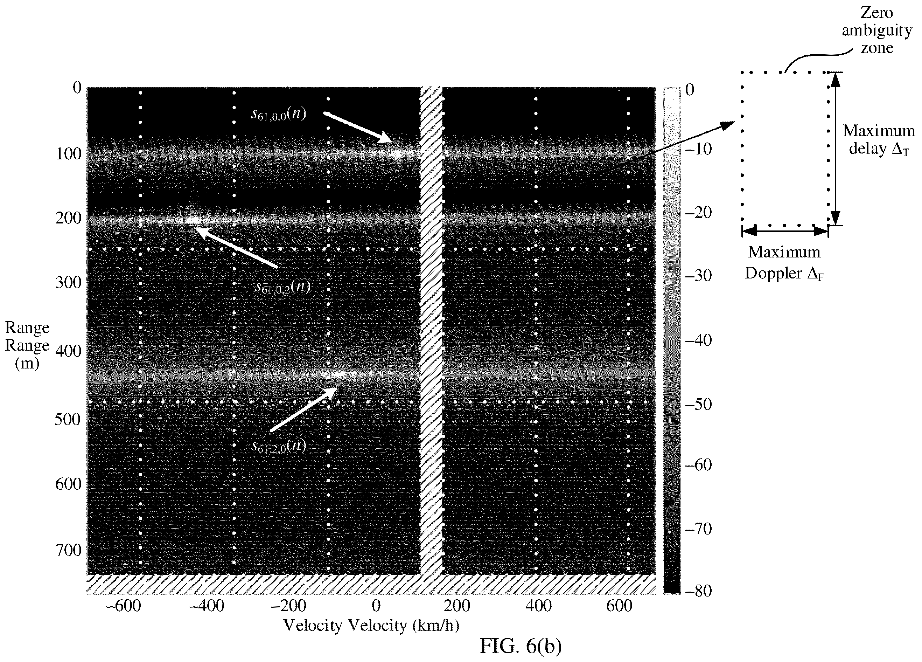

FIG. 6(a) and FIG. 6(b) are a diagram of simulation of an ambiguity function of a cyclic shift sequence according to an embodiment of this application. FIG. 6(a) is a diagram of simulation of ambiguity functions of the foregoing 18 cyclic shift sequences, and FIG. 6(b) may be obtained by partially zooming-in a zone 501 (for example, a zone determined based on a range scope of 0 m to 700 m and a velocity range of -600 km/h to 600 km/h) in FIG. 6(a). It can be learned from FIG. 6(b) that the zone 501 includes three cyclic shift sequences $s_{61,0,0}(n)$, $s_{61,0,2}(n)$, $s_{61,2,0}(n)$, a white bright spot shown in the figure is a peak of an ambiguity function, and each dashed-line box represents a zero ambiguity zone. Peaks of ambiguity functions of the three cyclic shift sequences may be within different zero ambiguity zones by performing different delay domain cyclic shifts and different Doppler domain cyclic shifts. This indicates that the three cyclic shift sequences are orthogonal to each other. After receiving the three cyclic shift sequences, the receive end (the second apparatus) can obtain, through measurement, a range and a velocity of a target object without ambiguity.

In a possible implementation, a value of the sequence length $N$ may be equal to a product of $M$ ($N_1$, $N_2$, ..., $N_M$) mutually different prime numbers, that is, $N = N_1 \cdot N_2 \cdot ... \cdot N_M$. Therefore, the quadratic exponential sequence includes sequences with the M mutually different prime numbers as quadratic term coefficients. The quadratic exponential sequence set includes G sequence sets obtained by separately performing delay domain cyclic shifts and Doppler domain cyclic shifts on the sequences with the M mutually different prime numbers as quadratic term coefficients, where G is a positive integer. An upper bound of a sequence capacity that can be supported is $MN/\Delta_T\Delta_F$.

In a possible design, when M is equal to 2, the sequence length is equal to a first prime number multiplied by a second prime number. The quadratic exponential sequence includes a first sequence with the first prime number as a quadratic term coefficient and a second sequence with the second prime number as a quadratic term coefficient. The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient. Therefore, when a quantity of cyclic shift sequences generated by using the first prime number as the quadratic term coefficient cannot meet the requirement on the total quantity of users needing to be supported, a cyclic shift sequence generated by using the second prime number as the quadratic term coefficient may be added.

In a possible implementation, when M is equal to 3, the sequence length is equal to a third prime number multiplied by a fourth prime number multiplied by a fifth prime number. The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient. The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient. Therefore, when a quantity of cyclic shift sequences generated by using the third prime number as the quadratic term coefficient cannot meet the requirement on the total quantity of users needing to be supported, a cyclic shift sequence generated by using the fourth prime number as the quadratic term coefficient may be added. When a quantity of cyclic shift sequences generated by using the fourth prime number as the quadratic term coefficient cannot meet the requirement on the total quantity of users needing to be supported, a cyclic shift sequence generated by using the fifth prime number as the quadratic term coefficient may be added.

In a possible implementation, when the cyclic shift sequence is used to generate a random access signal, the first apparatus may obtain, based on random access information broadcast by a network device, related information for sending the random access signal, including the sequence length $N$, available quadratic term coefficients of the quadratic exponential sequence, and the maximum delay $\Delta_T$ and the maximum Doppler shift $\Delta_F$ in the cell.

In a possible implementation, the first apparatus may randomly select a quadratic term coefficient u from the available quadratic term coefficients of the quadratic exponential sequence, and determine, based on the sequence length $N$, the quadratic term coefficient $u$, and the maximum delay $\Delta_T$ and the maximum Doppler shift $\Delta_F$ in the cell, an available delay cyclic shift index $k$ and an available Doppler cyclic shift index $l$ that are corresponding to each quadratic term coefficient. Next, the first apparatus obtains the cyclic shift sequence by performing the delay domain cyclic shift and the Doppler domain cyclic shift on the formula (3.1) based on the sequence length $N$, the quadratic term coefficient $u$, the maximum delay $\Delta_T$, the maximum Doppler shift $\Delta_F$, the delay cyclic shift index k, and the Doppler cyclic shift index $l$.

In a possible implementation, the first apparatus may randomly select a quadratic term coefficient u from the available quadratic term coefficients of the quadratic exponential sequence, then determine a delay cyclic shift index and a Doppler cyclic shift index in a prestored cyclic shift set based on the sequence length $N$, the quadratic term coefficient $u$, and the maximum delay $\Delta_T$ and the maximum Doppler shift $\Delta_F$ in the cell, and perform cyclic shifts on the quadratic exponential sequence based on the delay domain cyclic shift and the Doppler domain cyclic shift.

In a possible implementation, the first apparatus may randomly select a quadratic term coefficient u from the available quadratic term coefficients of the quadratic exponential sequence, and determine a cyclic shift sequence in a prestored quadratic exponential sequence set based on the sequence length $N$, the quadratic term coefficient $u$, and the maximum delay $\Delta_T$ and the maximum Doppler shift $\Delta_F$ in the cell.

In another possible implementation, when the cyclic shift sequence is used to generate a sensing signal, the first apparatus may receive configuration information, about the sensing signal, sent by a server or a control node. The configuration information includes related information used to determine the cyclic shift sequence, and may specifically include the sequence length $N$, the quadratic term coefficient $u$, one delay cyclic shift in one or more delay cyclic shifts corresponding to the quadratic term coefficient u, one Doppler cyclic shift in one or more Doppler cyclic shifts corresponding to the quadratic term coefficient u, and the maximum delay $\Delta_T$ and the maximum Doppler shift $\Delta_F$ in the sensing zone. Therefore, the first apparatus may obtain the cyclic shift sequence by performing the delay domain cyclic shift and the Doppler domain cyclic shift on the formula (3.1) based on the sequence length $N$, the quadratic term coefficient u, the maximum delay $\Delta_T$, the maximum Doppler shift $\Delta_F$, the delay cyclic shift index $k$, and the Doppler cyclic shift index $l$.

In a possible implementation, the first apparatus may determine, based on the sequence length $N$, the quadratic term coefficient $u$, and the maximum delay $\Delta_T$ and the maximum Doppler shift $\Delta_F$ in the cell, a delay cyclic shift index and a Doppler cyclic shift index in a prestored cyclic shift set, and perform cyclic shifts on the quadratic exponential sequence based on the delay domain cyclic shift and the Doppler domain cyclic shift.

In a possible implementation, the first apparatus may determine the cyclic shift sequence in a prestored quadratic exponential sequence set based on the sequence length $N$, the quadratic term coefficient $u$, and the maximum delay $\Delta_T$ and the maximum Doppler shift $\Delta_F$ in the cell.

In a possible implementation, when the cyclic shift sequence is used to generate a sensing signal, the first apparatus may determine configuration information of the sensing signal, and obtain the cyclic shift sequence. Optionally, the first apparatus may further send the configuration information of the sensing signal to the second apparatus.

It may be understood that:

Step S402: The first apparatus outputs the cyclic shift sequence.

Specifically, the first apparatus may send the cyclic shift sequence to the second apparatus. Correspondingly, the second apparatus may receive the cyclic shift sequence from the first apparatus, or the second apparatus may receive a cyclic shift sequence reflected by the target object.

In a possible implementation, the first apparatus performs N-point DFT transform on the cyclic shift sequence to obtain a cyclic shift sequence distributed in frequency domain, or may perform a weighted shift on the cyclic shift sequence to obtain a cyclic shift sequence distributed in frequency domain, to omit a DFT operation. Next, subcarrier mapping is performed, the cyclic shift sequence that is distributed in frequency domain and that is obtained through the DFT is mapped to a corresponding subcarrier position, a time domain signal may be obtained after IDFT is performed on the mapped cyclic shift sequence distributed in frequency domain, and a time domain signal including the cyclic shift sequence is sent to the second apparatus or the target object after corresponding processing (for example, inserting a cyclic prefix) is performed on the time domain signal.

Step S403: The second apparatus processes the cyclic shift sequence.

In a possible implementation, if the cyclic shift sequence is used to generate a random access signal, the terminal device or the first apparatus in the terminal device sends a signal including the cyclic shift sequence to the network device or the second apparatus in the network device, and the network device or the second apparatus in the network device processes the cyclic shift sequence.

In a possible implementation, if the cyclic shift sequence is used to generate a sensing signal, the network device or the first apparatus in the network device sends a signal including the cyclic shift sequence to the target object, and the target object may reflect the signal including the cyclic shift sequence, so that the signal is received by the network device or the second apparatus in the network device, and the network device or the second apparatus in the network device processes the cyclic shift sequence.

It may be understood that a zone in which a signal attenuates from a maximum value to a first zero point is referred to as a main lobe, and a zone, between adjacent zero points, next to the main lobe is referred to as a side lobe or a sidelobe. For a signal whose time and bandwidth are restricted, a side lobe appears for the ambiguity function of the cyclic shift sequence. In a possible case, a peak of an ambiguity function of the cyclic shift sequence causes a side lobe to appear within a zero ambiguity zone between adjacent Doppler cyclic shifts. The side lobe is not conducive to Doppler estimation, and the cyclic shift sequence needs to be suppressed.

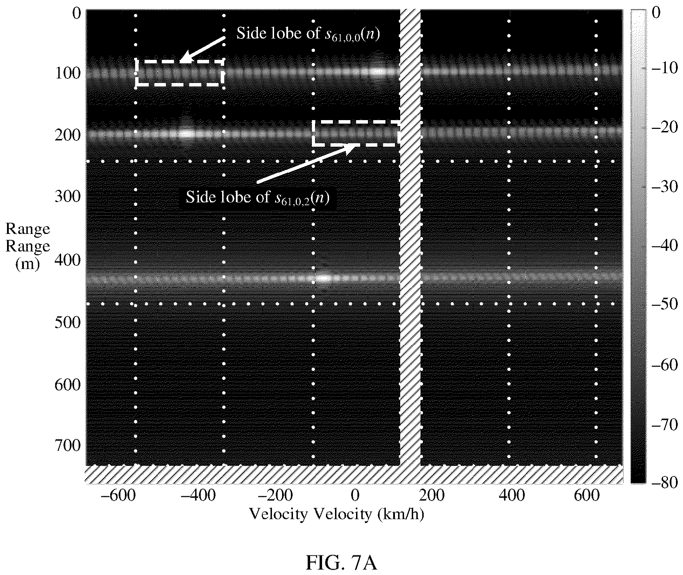

FIG. 7A is a diagram of side lobes appearing within a zero ambiguity zone according to an embodiment of this application. It can be learned from FIG. 7A that, for a cyclic shift sequence $s_{61,0,2}(n)$, a peak of an ambiguity function of $s_{61,0,2}(n)$ is within a first zero ambiguity zone, and a side lobe of an ambiguity function of $s_{61,0,0}(n)$ also appears within the first zero ambiguity zone. For a cyclic shift sequence $s_{61,0,0}(n)$, a peak of the ambiguity function of $s_{61,0,0}(n)$ is within a second zero ambiguity zone, and a side lobe of the ambiguity function of $s_{61,0,2}(n)$ also appears within the second zero ambiguity zone. Therefore, a side lobe appearing within a zero ambiguity zone in which the peak of the ambiguity function is located causes interference to signal processing. This is unfavorable to Doppler estimation.

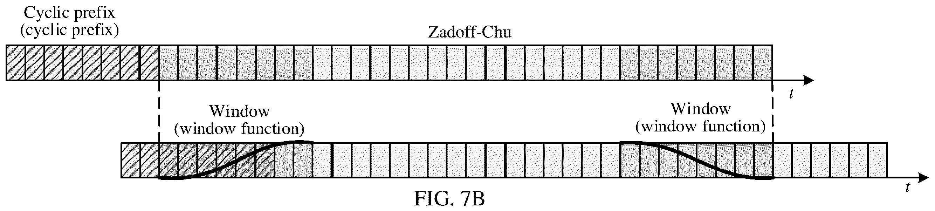

In a possible implementation, before calculating the ambiguity function of the cyclic shift sequence, the second apparatus first performs time domain windowing processing on the received cyclic shift sequence. Windowing means that a window function is used as a modulation wave, and an input signal is used as a carrier for amplitude modulation. FIG. 7B is a diagram of a receive window function according to an embodiment of this application. By using a raised cosine window, a main lobe is widened and its amplitude is reduced, and side lobes of an ambiguity function are suppressed, so that the side lobes counteract each other.

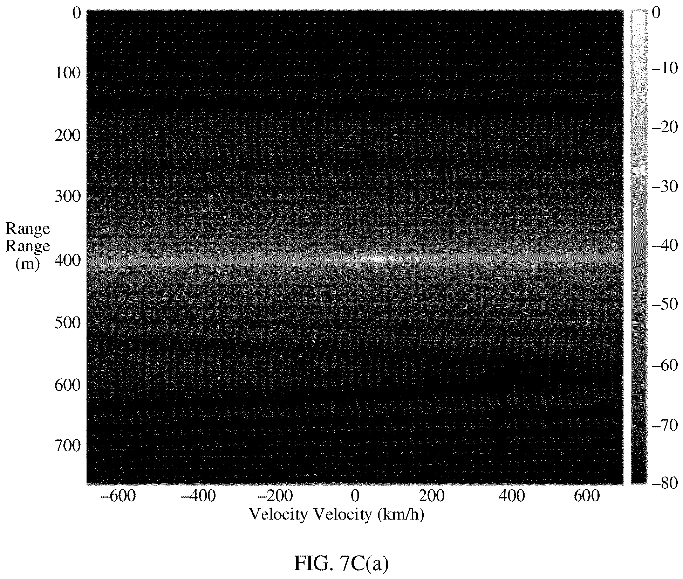

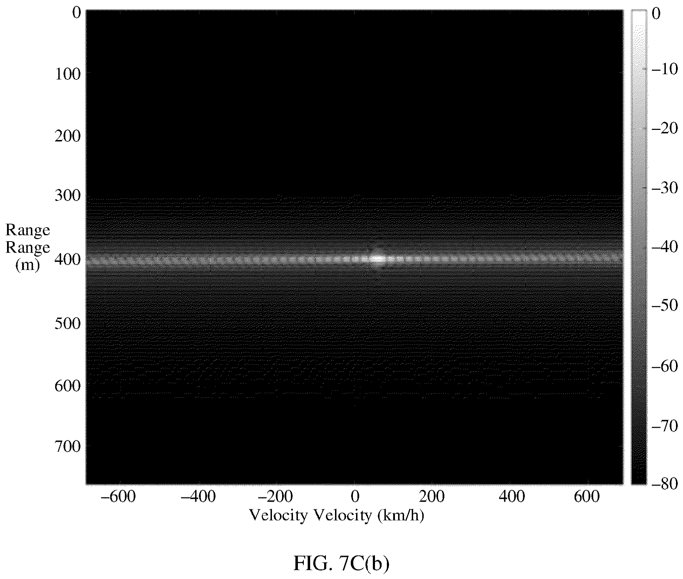

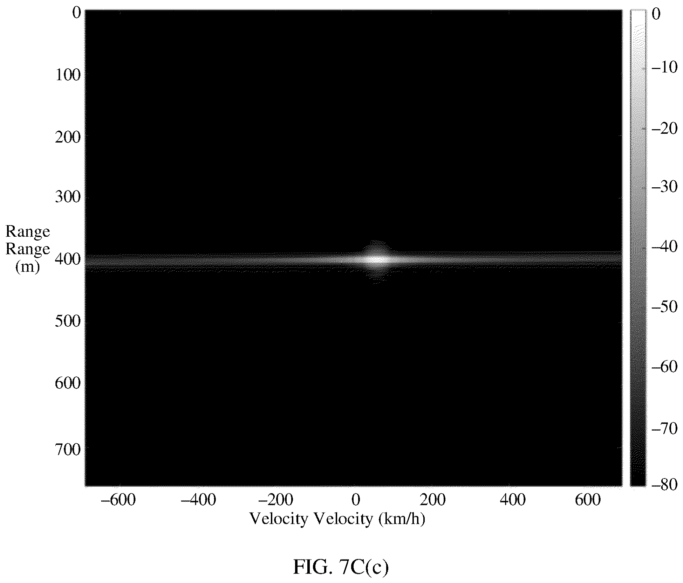

FIG. 7C(a) to FIG. 7C(c) are a diagram of suppressing a Doppler side lobe by using different roll-off factors according to an embodiment of this application. A roll-off factor in FIG. 7C(a) is 0, a roll-off factor in FIG. 7C(b) is a reciprocal of the quadratic term coefficient of the sequence, and a roll-off factor in FIG. 7(c) is 1. Through comparison of FIG. 7C(a) to FIG. 7C (c), the roll-off factors are sequentially increased, and simulation results show that attenuation speeds of the side lobe are also sequentially increased. It indicates that the raised cosine window function may suppress the side lobe of the ambiguity function, reducing interference.

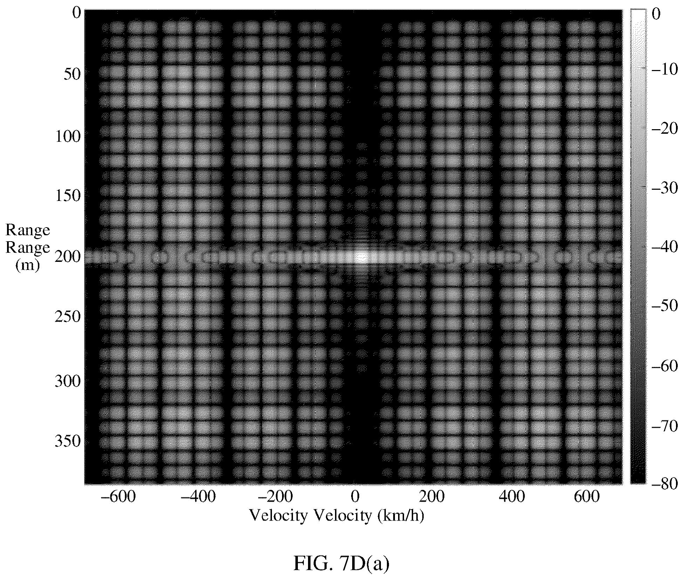

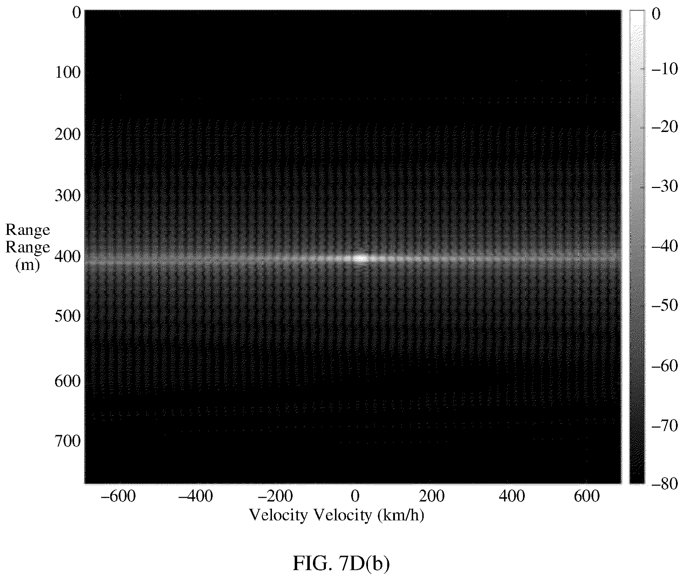

FIG. 7D(a) and FIG. 7D(b) are a diagram of comparison between ambiguity functions of two sequences according to an embodiment of this application. FIG. 7D(a) is an ambiguity function of a Prouhet-Thue-Morse sequence, and FIG. 7D(b) is an ambiguity function of a quadratic exponential sequence. It can be learned that in an actual Doppler model, a side lobe suppression capability of the quadratic exponential sequence is stronger than that of the Prouhet-Thue-Morse sequence. In addition, a sequence capacity obtained by performing a delay domain cyclic shift and a Doppler domain cyclic shift on the quadratic exponential sequence can be larger than that of a Gray complementary sequence pair. Therefore, in a communication system, generating a random access signal or a sensing signal by using a quadratic exponential sequence can improve system performance and save resources.

Scenarios to which embodiments of this application are applicable include but are not limited to the following scenarios.

[Scenario 1] A quadratic exponential sequence is used to generate a random access signal.

In a possible implementation scenario, the terminal device 104 shown in FIG. 1 is used as an example for description. The terminal device 104 obtains a cyclic shift sequence. The cyclic shift sequence includes a delay domain cyclic shift and a Doppler domain cyclic shift. The cyclic shift sequence is a sequence in a quadratic exponential sequence set, and the quadratic exponential sequence set is a sequence set obtained by performing a delay domain cyclic shift and a Doppler domain cyclic shift on the quadratic exponential sequence. A zero ambiguity zone includes sequences with a same quadratic term coefficient in the quadratic exponential sequence set, and a low ambiguity zone includes sequences with different quadratic term coefficients in the quadratic exponential sequence set. Specifically, the terminal device 104 may obtain the cyclic shift sequence based on the foregoing communication method, for example, the communication method shown in FIG. 4.

The terminal device 104 sends a random access signal including the cyclic shift sequence to the network device 111 or a functional module in the network device.

The network device 111 or the functional module in the network device may receive the random access signal including the cyclic shift sequence, and implement downlink signal synchronization and uplink random access of the terminal device 104 based on a correlation of the cyclic shift sequence. Specifically, the network device 111 may obtain, through measurement based on the cyclic shift sequence, a range between the terminal device 104 and the network device 111 or a velocity of the terminal device 104 relative to the network device 111. The network device 111 may calculate, based on the range or the velocity, a timing advance needed by the terminal device 104, and feed back the timing advance to the terminal device 104. Therefore, in a random access process, the terminal device 104 is identified by the network device 111, and obtains the timing advance estimated by the network device 111, to establish uplink and downlink synchronization and construct a bidirectional link between the terminal device 104 and the network device 111. Then, the terminal device 104 may perform data transmission based on a resource scheduled by the network device 111.

[Scenario 2] A quadratic exponential sequence is used to generate a sensing signal.

In a possible implementation scenario, the network device 111 shown in FIG. 1 is used as an example for description. The network device 111 obtains a cyclic shift sequence. The cyclic shift sequence includes a delay domain cyclic shift and a Doppler domain cyclic shift. The cyclic shift sequence is a sequence in a quadratic exponential sequence set, and the quadratic exponential sequence set is a sequence set obtained by performing a delay domain cyclic shift and a Doppler domain cyclic shift on the quadratic exponential sequence. A zero ambiguity zone includes sequences with a same quadratic term coefficient in the quadratic exponential sequence set, and a low ambiguity zone includes sequences with different quadratic term coefficients in the quadratic exponential sequence set. Specifically, the network device 111 may obtain the cyclic shift sequence based on the foregoing communication method, for example, the communication method shown in FIG. 4.

In a possible implementation, the network device 111 may receive sequence configuration information sent by a server or a control node (not shown in FIG. 1), or may receive sequence configuration information sent by the terminal device, or may receive sequence configuration information sent by the network device 112.

The network device 111 sends a sensing signal including the cyclic shift sequence to a target object (for example, a vehicle in an ambient environment).

The target object may reflect the sensing signal including the cyclic shift sequence, so that the sensing signal is received by the network device 111 or a functional module in the network device 111. The network device 111 or the functional module in the network device 111 determines some attributes of the target object based on the reflection of the sensing signal, including one or more of a range, a position, a shape, or a velocity.

In a possible implementation, the sensing signal including the cyclic shift sequence that is reflected by the target object may be received by the network device 112 or a functional module in the network device 112. The network device 112 or the functional module in the network device 112 determines some attributes of the target object based on the reflection of the sensing signal, including one or more of a range, a position, a shape, or a velocity.

In another possible implementation, the sensing signal including the cyclic shift sequence that is reflected by the target object may be received by the terminal device or a functional module in the terminal device. The terminal device or the functional module in the terminal device determines some attributes of the target object based on the reflection of the sensing signal, including one or more of a range, a position, a shape, or a velocity.

It should be noted that the terminal device or the functional module in the terminal device may alternatively obtain the cyclic shift sequence, to send the sensing signal including the cyclic shift sequence to the target object.

The following describes some possible implementations of the cyclic shift sequence.

[Implementation 1]

In a possible implementation, a value of the sequence length $N$ may be equal to a product of $M$ ($N_1$, $N_2$, ..., $N_M$) mutually different prime numbers, that is, $N = N_1 \cdot N_2 \cdot ... \cdot N_M$. Therefore, the quadratic exponential sequence includes sequences with the $M$ mutually different prime numbers as quadratic term coefficients. The quadratic exponential sequence set includes $G$ sequence sets obtained by separately performing delay domain cyclic shifts and Doppler domain cyclic shifts on the sequences with the $M$ mutually different prime numbers as quadratic term coefficients, where $G$ is a positive integer. An upper bound of a sequence capacity that can be supported is $MN/\Delta_T\Delta_F$.

When M = 2, the sequence length $N$ is equal to a first prime number P multiplied by a second prime number Q, that is, $N = P \cdot Q$. The quadratic exponential sequence may include a first sequence with the first prime number P as a quadratic term coefficient and a second sequence with the second prime number Q as a quadratic term coefficient.

An expression of a discrete-time signal of the first sequence with the first prime number P as a quadratic term coefficient may be as follows:

$$s_{P,k,l}(n) = e^{-j\pi[P(n+k\Delta_T)(n+k\Delta_T+1)+2nl\Delta_F]/N}, n = 0, 1, ..., N-1 \quad (4.1)$$

where a delay cyclic shift index $k = 0, 1, ..., \lfloor Q/\Delta_T \rfloor - 1$, a Doppler cyclic shift index $l = 0, 1, ..., \lfloor P/\Delta_F \rfloor - 1$, and a sequence capacity of a zero ambiguity zone is $\lfloor Q/\Delta_T \rfloor \lfloor P/\Delta_F \rfloor$. A first sequence set is obtained by performing a delay domain cyclic shift and a Doppler domain cyclic shift on the first sequence $s_{P,k,l}(n)$ with the first prime number P as a quadratic term coefficient. The zero ambiguity zone includes cyclic shift sequences in the first sequence set.

An expression of a discrete-time signal of the second sequence with the second prime number Q as a quadratic term coefficient may be as follows:

$$s_{Q,k,l}(n) = e^{-j\pi[Q(n+k\Delta_T)(n+k\Delta_T+1)+2nl\Delta_F]/N}, n = 0, 1, ..., N-1 \quad (4.2)$$

where a delay cyclic shift index $k = 0, 1, ..., \lfloor P/\Delta_T \rfloor - 1$, a Doppler cyclic shift index $l = 0, 1, ..., \lfloor Q/\Delta_F \rfloor - 1$, and a sequence capacity of a zero ambiguity zone is $\lfloor P/\Delta_T \rfloor \lfloor Q/\Delta_F \rfloor$. A second sequence set is obtained by performing a delay domain cyclic shift and a Doppler domain cyclic shift on the second sequence $s_{Q,k,l}(n)$ with the second prime number Q as a quadratic term coefficient. The zero ambiguity zone includes cyclic shift sequences in the second sequence set.

A low ambiguity zone includes the first sequence $s_{P,k,l}(n)$ with the first prime number $P$ as a quadratic term coefficient and the second sequence $s_{Q,k,l}(n)$ with the second prime number $Q$ as a quadratic term coefficient. An ambiguity function between the first sequence and the second sequence may be expressed as follows:

$$A_{s_{P,k,l},s_{Q,\kappa,\ell}}(\tau, \nu) = \sum_{n=0}^{N-1} s_{P,k,l}(n)s_{Q,\kappa,\ell}^*(n+\tau)e^{j2\pi n\nu/N}, n = 0, 1, ..., N-1 \quad (4.3)$$

where $\tau$ represents a time difference between delays of echo signals of an apparatus for transmitting the first sequence and an apparatus for transmitting the second sequence relative to the transmit signal, and $v$ represents a Doppler frequency difference between the apparatus for transmitting the first sequence and the apparatus for transmitting the second sequence.

A maximum value $\max\limits_{\tau,v}\left|A_{s_{P,k,l},s_{Q,\kappa,\ell}}(\tau,v)\right| = \sqrt{N\gcd(Q-P,N)} = \sqrt{N}$ of the ambiguity function between the first sequence $s_{P,k,l}(n)$ and the second sequence $s_{Q,k,l}(n)$ may be obtained through calculation, where gcd represents a greatest common divisor (greatest common divisor, GCD), and a greatest common divisor of two numbers $a$ and $b$ is a greatest positive integer that exactly divides both $a$ and $b$, which is denoted as gcd($a$, $b$).

It can be learned that, because the sequence length being a composite number is decomposed into a product of two different prime numbers $N = P \cdot Q$, in a maximum value $\sqrt{N\gcd(Q-P,N)}$, $Q - P$ and $N$ are always mutually prime. It should be noted that, when the two prime numbers are different, a greatest common factor of the two prime numbers is 1. Therefore, a maximum value $\sqrt{N}$ of the ambiguity function in the low ambiguity zone is the same as that of an existing ZC sequence.

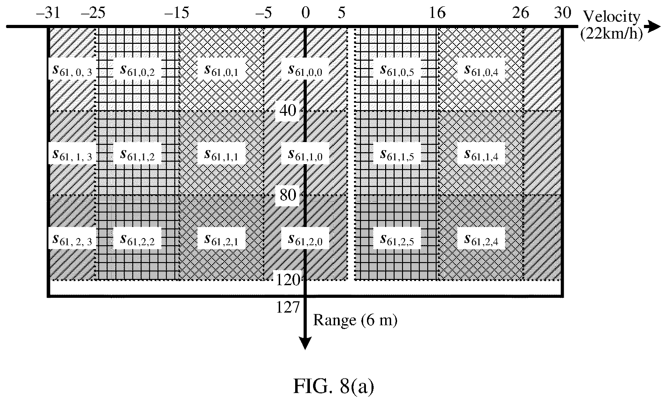

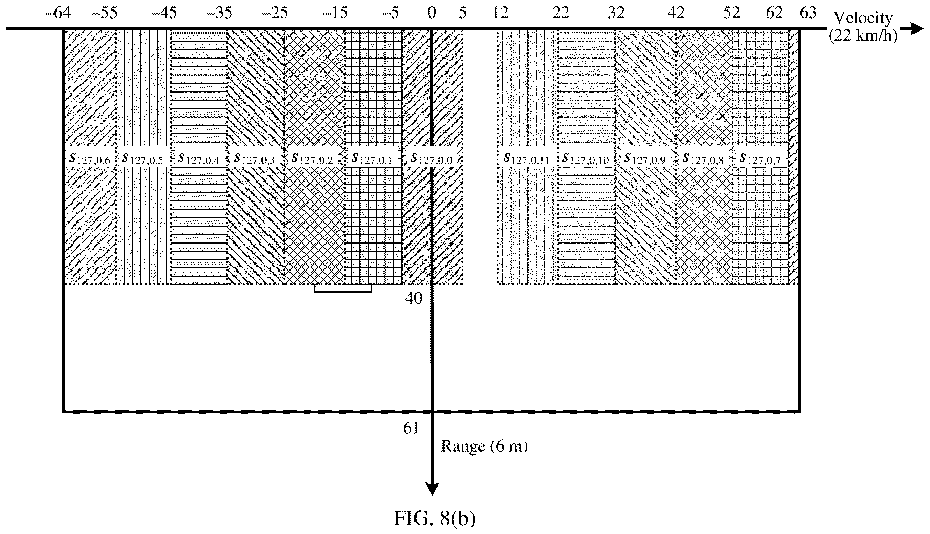

FIG. 8(a) and FIG. 8(b) are a diagram of an ambiguity function of a cyclic shift sequence whose sequence length is a product of two prime numbers according to an embodiment of this application. When the sequence length $N = 7747$, $N = 7747 = 61 \cdot 127$, a first prime number P may be 61, and a second prime number Q may be 127. When a zero ambiguity zone determined based on cell information is: $\Delta_T \times \Delta_F$ = 40 $\times$ 1, a delay domain cyclic shift index $k = 0, 1, \ldots, \lfloor Q/\Delta_T \rfloor - 1 = 0, 1, \ldots, \lfloor 127/40 \rfloor - 1 = 0, 1, 2$ of a first sequence and a Doppler domain cyclic shift index $l = 0, 1, \ldots, \lfloor P/\Delta_F \rfloor - 1 = 0, 1, \ldots, \lfloor 61/10 \rfloor - 1 = 0, 1, 2, 3, 4, 5$ of the first sequence may be obtained. Therefore, after delay domain cyclic shifts and Doppler domain cyclic shifts are performed, according to the formula (4.1), on a quadratic exponential sequence whose sequence length $N$ is 7747 and whose quadratic term coefficient P is 61, it can be learned from FIG. 8(a) that 18 cyclic shift sequences may be obtained: $s_{61,0,0}$, $s_{61,0,1}$, $s_{61,0,2}$, $s_{61,0,3}$, $s_{61,0,4}$, $s_{61,0,5}$, $s_{61,1,0}$, $s_{61,1,1}$, $s_{61,1,2}$, $s_{61,1,3}$, $s_{61,1,4}$, $s_{61,1,5}$, $s_{61,2,0}$, $s_{61,2,1}$, $s_{61,2,2}$, $s_{61,2,3}$, $s_{61,2,4}$, and $s_{61,2,5}$. A peak of an ambiguity function of each cyclic shift sequence is within a different zero ambiguity zone (not shown in the figure).

A delay domain cyclic shift index of a second sequence is $k = 0, 1, \ldots, \lfloor P/\Delta_T \rfloor - 1$, where $\lfloor 61/40 \rfloor - 1 = 0$, that is, k = 0. A Doppler domain cyclic shift index of the first sequence is $l = 0, 1, \ldots, \lfloor Q/\Delta_F \rfloor - 1$, where $\lfloor 127/10 \rfloor - 1 = 11$, that is, $l$ = 0, 1, 2, 3, 4, 5, 6, 7, 8, 9, 10, 11. Therefore, after delay domain cyclic shifts and Doppler domain cyclic shifts are performed, according to the formula (4.1), on a quadratic exponential sequence whose sequence length $N$ is 7747 and whose quadratic term coefficient Q is 127, it can be learned from FIG. 8(b) that 12 cyclic shift sequences may be obtained: $s_{127,0,0}$, $s_{127,0,1}$, $s_{127,0,2}$, $s_{127,0,3}$, $s_{127,0,4}$, $s_{127,0,5}$, $s_{127,0,6}$, $s_{127,0,7}$, $s_{127,0,8}$, $s_{127,0,9}$, $s_{127,0,10}$, and $s_{127,0,11}$.

Therefore, when the sequence length $N$=7747, the first prime number is 61, the second prime number Q is 127, and the zero ambiguity zone in a cell is: $\Delta_T \times \Delta_F$ = 40 $\times$ 10, a total sequence capacity is 30.

When the sequence length is a product of two different prime numbers, a low ambiguity zone includes cyclic shift sequences with the two different prime numbers as quadratic term coefficients, and a maximum value of an ambiguity function of the low ambiguity zone may be $\sqrt{N}$. This indicates that there is a low correlation between the two cyclic shift sequences.

[Implementation 2]

In a possible implementation, a value of the sequence length $N$ may be equal to a product of $M$ ($N_1$, $N_2$, ..., $N_M$) mutually different prime numbers, that is, $N = N_1 \cdot N_2 \cdot \ldots \cdot N_M$. Therefore, the quadratic exponential sequence includes sequences with the M mutually different prime numbers as quadratic term coefficients. The quadratic exponential sequence set includes G sequence sets obtained by separately performing delay domain cyclic shifts and Doppler domain cyclic shifts on the sequences with the $M$ mutually different prime numbers as quadratic term coefficients, where $G$ is a positive integer. An upper bound of a sequence capacity that reaches a maximum value $\sqrt{N}$ of the ambiguity function is $MN/\Delta_T\Delta_F$.

**When M = 3, the sequence length $N$ is equal to a third prime number P multiplied by a fourth prime number $Q$ multiplied by a fifth prime number R, that is, $N = P \cdot Q \cdot R$.** Therefore, the quadratic exponential sequence may include a third sequence with the third prime number P as a quadratic term coefficient, a fourth sequence with the fourth prime number Q as a quadratic term coefficient, and a fifth sequence with the fifth prime number $Q$ as a quadratic term coefficient.

**An expression of a discrete-time signal of the third sequence with the third prime number $P$ as a quadratic term coefficient may be as follows:**

$$s_{P,k,l}(n) = e^{-j\pi[P(n+k\Delta_{\mathrm{T}})(n+k\Delta_{\mathrm{T}}+1)+2nl\Delta_{\mathrm{F}}]/N}, n = 0, 1, ..., N-1 \quad (5.1)$$

where a delay cyclic shift index $k = 0, 1, ..., \lfloor QR \rfloor - 1$, a Doppler cyclic shift index $l = 0, 1, ..., \lfloor P/\Delta_{\mathrm{F}} \rfloor - 1$, and a sequence capacity of a zero ambiguity zone is $\lfloor QR/\Delta_{\mathrm{T}} \rfloor \lfloor P/\Delta_{\mathrm{F}} \rfloor$. A third sequence set is obtained by performing a delay domain cyclic shift and a Doppler domain cyclic shift on the third sequence $s_{P,k,l}(n)$ with the third prime number P as a quadratic term coefficient. The zero ambiguity zone includes cyclic shift sequences in the third sequence set.

An expression of a discrete-time signal of the fourth sequence with the fourth prime number *Q* as a quadratic term coefficient may be as follows:

$$s_{Q,k,l}(n) = e^{-j\pi[Q(n+k\Delta_{\mathrm{T}})(n+k\Delta_{\mathrm{T}}+1)+2nl\Delta_{\mathrm{F}}]/N}, n = 0, 1, ..., N-1 \quad (5.2)$$

where a delay cyclic shift index $k = 0, 1, ..., \lfloor RP/\Delta_{\mathrm{T}} \rfloor - 1$, a Doppler cyclic shift index $l = 0, 1, ..., \lfloor Q/\Delta_F \rfloor - 1$, and a sequence capacity of a zero ambiguity zone is $\lfloor RP/\Delta_{\mathrm{T}} \rfloor \lfloor Q/\Delta_F \rfloor$. A fourth sequence set is obtained by performing a delay domain cyclic shift and a Doppler domain cyclic shift on the fourth sequence $s_{Q,k,l}(n)$ with the fourth prime number *Q* as a quadratic term coefficient. The zero ambiguity zone includes cyclic sensing sequences in the fourth sequence set.

An expression of a discrete-time signal of the fifth sequence with the fifth prime number *R* as a quadratic term coefficient may be as follows:

$$s_{R,k,l}(n) = e^{-j\pi[R(n+k\Delta_{\mathrm{T}})(n+k\Delta_{\mathrm{T}}+1)+2nl\Delta_{\mathrm{F}}]/N}, n = 0, 1, ..., N-1 \quad (5.3)$$

where a delay cyclic shift index $k = 0, 1, ..., \lfloor PQ/\Delta_{\mathrm{T}} \rfloor - 1$, a Doppler cyclic shift index $l = 0, 1, ..., \lfloor R/\Delta_{\mathrm{F}} \rfloor - 1$, and a sequence capacity of a zero ambiguity zone is $\lfloor PQ/\Delta_{\mathrm{T}} \rfloor \lfloor R/\Delta_{\mathrm{F}} \rfloor$. A fifth sequence set is obtained by performing a delay domain cyclic shift and a Doppler domain cyclic shift on the fourth sequence $s_{R,k,l}(n)$ with the fifth prime number R as a quadratic term coefficient. The zero ambiguity zone includes cyclic sensing sequences in the fifth sequence set.

A low ambiguity zone includes any two of the third sequence $s_{P,k,l}(n)$ with the third prime number *P* as a quadratic term coefficient, the fourth sequence $s_{Q,k,l}(n)$ with the fourth prime number *Q* as a quadratic term coefficient, and the fifth sequence $s_{R,k,l}(n)$ with the fifth prime number *R* as a quadratic term coefficient. An ambiguity function between any two of the sequences may be expressed as follows:

$$A_{s_{u,k,l},s_{v,\kappa,\ell}}(\tau, v) = \sum_{n=0}^{N-1} s_{u,k,l}(n)s_{v,\kappa,\ell}^*(n+\tau)\, e^{j2\pi nv/N}, (u, v) \in \{(P,Q),(Q,R),(P,R)\} \quad (5.4)$$

where $\tau$ represents a time difference between delays, relative to a transmit signal, of echo signals of any two apparatuses in an apparatus for transmitting the third sequence, an apparatus for transmitting the fourth sequence, and an apparatus for transmitting the fifth sequence, and *v* represents a Doppler frequency difference between any two apparatuses in the apparatus for transmitting the third sequence, the apparatus for transmitting the fourth sequence, and the apparatus for transmitting the fifth sequence.

A maximum value of an ambiguity function between any two of the third sequence $s_{P,k,l}(n)$, the fourth sequence $s_{Q,k,l}(n)$, and the fifth sequence $s_{R,k,l}(n)$ is $\max_{\tau,v}\left|A_{s_{u,k,l},s_{v,\kappa,\ell}}(\tau,v)\right| = \sqrt{N\gcd(v-u,N)} = \sqrt{N}$.

It can be learned that, because the sequence length being a composite number is decomposed into a product of three different prime numbers $N = P \cdot Q \cdot R$, in a maximum value $\sqrt{N\gcd(v-u,N)}$, *(Q-P)* or *(R-Q)* or *(R-P)* and *N* are always mutually prime. It should be noted that, when two prime numbers are different, a greatest common factor of the two prime numbers is 1. Therefore, a maximum value $\sqrt{N}$ of the ambiguity function in the low ambiguity zone is the same as that of an existing ZC sequence.

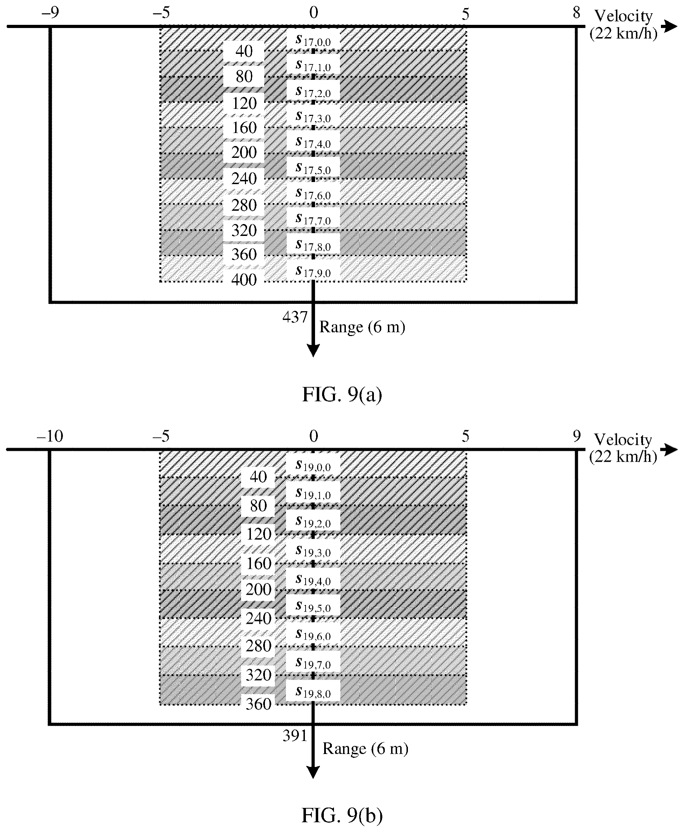

FIG. 9(a) to FIG. 9(c) are a diagram of an ambiguity function of a cyclic shift sequence whose sequence length is a product of three prime numbers according to an embodiment of this application. When the sequence length $N = 7429$, $N = 7429 = 17 \cdot 19 \cdot 23$, a third prime number *P* may be 17, a fourth prime number *Q* may be 19, and a fifth prime number *R* may be 23. When a zero ambiguity zone determined based on cell information is: $\Delta_{\mathrm{T}} \times \Delta_{\mathrm{F}} = 40 \times 10$, a delay domain cyclic shift

$k = 0, 1, ..., \lfloor QR/\Delta_T \rfloor - 1 = 0, 1, ..., \lfloor 19 \cdot 23/40 \rfloor - 1 = 0, 1, 2, 3, 4, 5, 6, 7, 8, 9$ of a third sequence and a Doppler domain cyclic shift index $l = 0, 1, ..., \lfloor P/\Delta_F \rfloor - 1 = 0, 1, ..., \lfloor 17/10 \rfloor - 1 = 0$ of the first sequence may be obtained. Therefore, after delay domain cyclic shifts and Doppler domain cyclic shifts are performed, according to the formula (5.1), on a quadratic exponential sequence whose sequence length $N$ is 7429 and whose quadratic term coefficient P is 17, it can be learned from FIG. 9(a) that 10 cyclic shift sequences may be obtained: $s_{17,0,0}$, $s_{17,1,0}$, $s_{17,2,0}$, $s_{17,3,0}$, $s_{17,4,0}$, $s_{17,5,0}$, $s_{17,6,0}$, $s_{17,7,0}$, $s_{17,8,0}$, and $s_{17,9,0}$. A peak of an ambiguity function of each cyclic shift sequence is within a different zero ambiguity zone (not shown in the figure). In addition, adjacent zero ambiguity zones complementarily overlap.

A delay domain cyclic shift of a fourth sequence is: $k = 0, 1, ..., \lfloor RP/\Delta_T \rfloor - 1$, where $\lfloor 23 \cdot 17/40 \rfloor - 1 = 8$, that is, k = 0, 1, 2, 3, 4, 5, 6, 7, 8. A Doppler domain cyclic shift of the first sequence is: $l = 0, 1, ..., \lfloor Q/\Delta_F \rfloor$, where $\lfloor 18/10 \rfloor - 1 = 0$, that is, l = 0. Therefore, after delay domain cyclic shifts and Doppler domain cyclic shifts are performed, according to the formula (5.2), on a quadratic exponential sequence whose sequence length $N$ is 7429 and whose quadratic term coefficient $Q$ is 19, it can be learned from FIG. 9(b) that nine cyclic shift sequences may be obtained: $s_{19,0,0}$, $s_{19,1,0}$, $s_{19,2,0}$, $s_{19,3,0}$, $s_{19,4,0}$, $s_{19,5,0}$, $s_{19,6,0}$, $s_{19,7,0}$, and $s_{19,8,0}$.

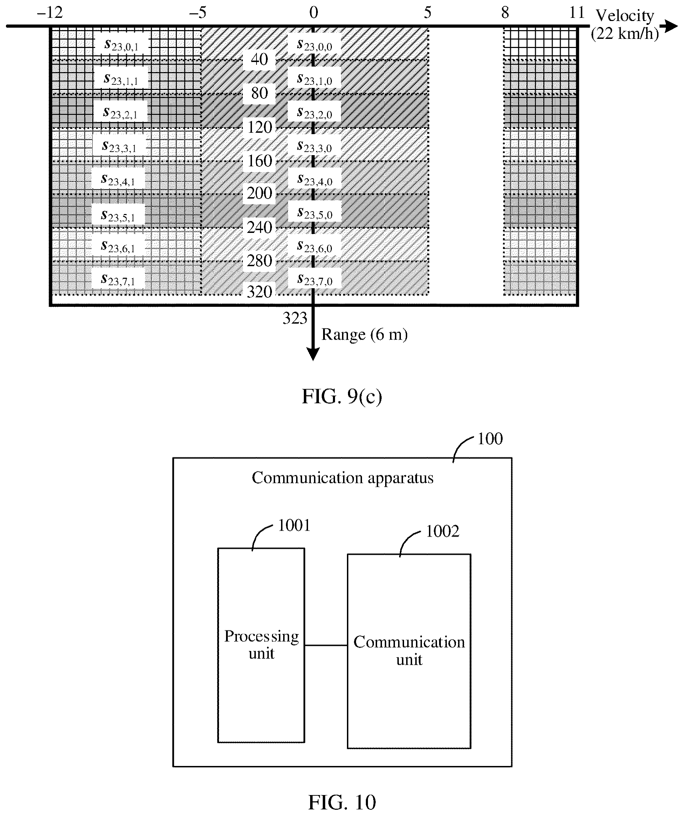

A delay domain cyclic shift of a fifth sequence is: $k = 0, 1, ..., \lfloor PQ/\Delta_T \rfloor - 1 = 0, 1, ..., \lfloor 17 \cdot 19/40 \rfloor - 1 = 0, 1, 2, 3, 4, 5, 6, 7$. A Doppler domain cyclic shift of the first sequence is: $l = 0, 1, ..., \lfloor R/\Delta_F \rfloor - 1 = 0, 1, ..., \lfloor 23/10 \rfloor - 1 = 0, 1$. Therefore, after delay domain cyclic shifts and Doppler domain cyclic shifts are performed, according to the formula (5.3), on a quadratic exponential sequence whose sequence length $N$ is 7429 and whose quadratic term coefficient $R$ is 23, it can be learned from FIG. 9(c) that 16 cyclic shift sequences may be obtained: $s_{23,0,0}$, $s_{23,1,0}$, $s_{23,2,0}$, $s_{23,3,0}$, $s_{23,4,0}$, $s_{23,5,0}$, $s_{23,6,0}$, $s_{23,7,0}$, $s_{23,0,1}$, $s_{23,1,1}$, $s_{23,2,1}$, $s_{23,3,1}$, $s_{23,4,1}$, $s_{23,5,1}$, $s_{23,6,1}$, and $s_{23,7,1}$. A peak of an ambiguity function of each cyclic shift sequence is within a different zero ambiguity zone (not shown in the figure). In addition, adjacent zero ambiguity zones complementarily overlap.

Therefore, when the sequence length $N$ = 7429, the third prime number is 17, the fourth prime number $Q$ is 19, the fifth prime number $R$ is 23, and the zero ambiguity zone in a cell is: $\Delta_T \times \Delta_F = 40 \times 10$, a total sequence capacity is 35.

When the sequence length is a product of three different prime numbers, a low ambiguity zone includes cyclic shift sequences with any two of the three different prime numbers as quadratic term coefficients, and a maximum value of an ambiguity function of the low ambiguity zone may be $\sqrt{N}$. This indicates that there is a low correlation between the two cyclic shift sequences, and a sequence capacity of the low ambiguity zone can be increased.

The foregoing describes in detail the method in embodiments of this application. The following provides apparatuses in embodiments of this application.

An embodiment of this application provides a communication apparatus. The communication apparatus may include modules or units that are in one-to-one correspondence with the methods/operations/steps/actions described in the foregoing method embodiments. The module or unit may be a hardware circuit, software, or a combination of the hardware circuit and the software. For example, FIG. 10 is a diagram of a structure of a communication apparatus 100 according to an embodiment of this application. The communication apparatus 100 may include a processing unit 1001 and a communication unit 1002. The communication apparatus 100 is configured to implement the foregoing communication method, for example, the communication method in the embodiment shown in FIG. 4.

Optionally, the communication apparatus 100 may be the first apparatus, the second apparatus, or the like in the foregoing embodiments, for example, the first apparatus or the second apparatus in the embodiment shown in FIG. 5.

In a possible implementation, when the communication apparatus 100 is the first apparatus in the foregoing embodiments,

the processing unit 1001 is configured to obtain a cyclic shift sequence, where the cyclic shift sequence includes a delay domain cyclic shift and a Doppler domain cyclic shift; and the communication unit 1002 is configured to output the cyclic shift sequence.

In a possible implementation, the processing unit 1001 is specifically configured to determine the cyclic shift sequence based on a sequence length, a quadratic term coefficient, a preset maximum delay, and a preset maximum Doppler shift.

In a possible implementation, when the communication apparatus 100 is the second apparatus in the foregoing embodiments, the communication unit 1002 is configured to receive a cyclic shift sequence, where the cyclic shift sequence includes a delay domain cyclic shift and a Doppler cyclic shift; and the processing unit is configured to process the cyclic shift sequence.

In a possible implementation, the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

In a possible implementation, a zero ambiguity zone includes cyclic shift sequences with a same quadratic term coefficient in the quadratic exponential sequence set, and a low ambiguity zone includes cyclic shift sequences with different quadratic term coefficients in the quadratic exponential sequence set.

In a possible implementation, an expression of a discrete-time signal of the quadratic exponential sequence is:

$$s_{u,k,l}(n) = e^{-j\pi[u(n+k\Delta_{\text{T}})(n+k\Delta_{\text{T}}+1)+2nl\Delta_{\text{F}}]/N}, n = 0, 1, \ldots, N-1$$

where $s_{u,k,l}(n)$ is the quadratic exponential sequence, $N$ represents a sequence length, the sequence length is a composite number, u represents a quadratic term coefficient, the quadratic term coefficient includes a prime factor of the sequence length, $k$ represents an index of the delay cyclic shift, $l$ represents an index of the Doppler cyclic shift, $\Delta_{\text{T}}$ represents a preset maximum delay, and $\Delta_{\text{F}}$ represents a preset maximum Doppler shift.

In a possible implementation, a value of the sequence length is equal to a product of $M$ mutually different prime numbers, where $M$ is a positive integer.

The quadratic exponential sequence includes sequences with the M mutually different prime numbers as quadratic term coefficients.

The quadratic exponential sequence set includes $G$ sequence sets obtained by separately performing delay domain cyclic shifts and Doppler domain cyclic shifts on the sequences with the $M$ mutually different prime numbers as quadratic term coefficients, where G is a positive integer.

In a possible implementation, when $M$ is equal to 2, the sequence length is equal to a first prime number multiplied by a second prime number.

The quadratic exponential sequence includes a first sequence with the first prime number as a quadratic term coefficient and a second sequence with the second prime number as a quadratic term coefficient.

The quadratic exponential sequence set includes a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

In a possible implementation, when $M$ is equal to 3, the sequence length is equal to a third prime number multiplied by a fourth prime number multiplied by a fifth prime number.

The quadratic exponential sequence includes a third sequence with the third prime number as a quadratic term coefficient, a fourth sequence with the fourth prime number as a quadratic term coefficient, and a fifth sequence with the fifth prime number as a quadratic term coefficient.

The quadratic exponential sequence set includes a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

In a possible implementation, the cyclic shift sequence is used to generate a random access signal or a sensing signal.

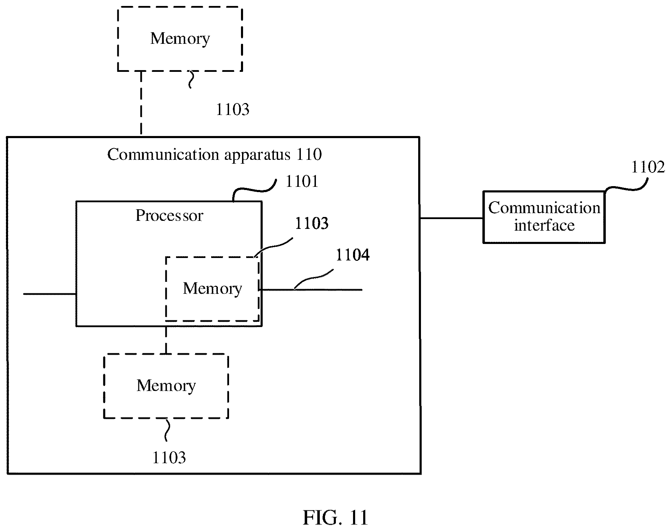

FIG. 11 is a diagram of a structure of a communication apparatus 110 according to an embodiment of this application. The communication apparatus 110 may be configured to implement functions of the first apparatus and the second apparatus in the foregoing methods. The communication apparatus 110 is an apparatus that has a computing capability and a communication capability. The communication apparatus herein may be a physical device, for example, a network device or a terminal device, or may be a communication unit, a component, or a chip in the network device, or may be a communication unit, a component, or a chip in the terminal device, or may be an apparatus that is used in cooperation with the network device, or may be an apparatus that is used in cooperation with the terminal device.

As shown in FIG. 11, the communication apparatus 110 includes a processor 1101. In a possible implementation, the communication apparatus 110 may further include at least one communication interface 1102, or the processor 1101 is coupled to the communication interface 1102. In another possible implementation, the communication apparatus 110 may further include at least one memory 1103. The memory 1103 may be integrated with the processor 1101, disposed separately, or located outside the communication apparatus 110. It should be understood that quantities of processors and memories in the communication apparatus 110 are not limited in this application.

The processor 1101 is a module for performing an operation, and may include any one or more of processors such as a controller (for example, a storage controller), a logic circuit, a baseband processor, a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), a field programmable gate array (field programmable gate array, FPGA), an application-specific integrated circuit (Application-Specific Integrated Circuit, ASIC), and a microcontrol unit (Microcontroller Unit, MCU).

The communication interface 1102 is configured to provide an information input or output for the at least one processor, and/or the communication interface 1102 may be configured to receive data sent from the outside and/or send data to the outside. The communication interface 1102 may be an input/output interface, may be a wired link interface including, for example, an Ethernet cable, or may be a wireless link (Wi-Fi, Bluetooth, universal wireless transmission, and another wireless communication technology) interface. Optionally, the communication interface 1102 may further include a transmitter (for example, a radio frequency transmitter or an antenna), a receiver, or the like that is coupled to the interface. For example, when the communication apparatus 110 is the first apparatus, the communication interface 1102 is configured to send a cyclic shift sequence. When the communication apparatus 110 is the second apparatus, the communication interface 1102 is configured to send a cyclic shift sequence.

The memory 1103 is configured to provide storage space. The storage space may optionally store application data, user data, an operating system, a computer program, a configuration file, and the like. The memory 1103 may include a volatile memory (volatile memory), for example, a random access memory (random access memory, RAM). The memory 1103 may further include a non-volatile memory (non-volatile memory), for example, a read-only memory (read-only memory, ROM), a flash memory, a hard disk drive (hard disk drive, HDD), or a solid-state drive (solid-state drive, SSD).

The communication apparatus 110 may further include a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, the bus is represented by using only one line in FIG. 11. However, this does not indicate that there is only one bus or only one type of bus. The bus 1104 may include a path for transmission of information between various parts (for example, the memory 1103, the processor 1101, and the communication interface 1102) of the communication apparatus 110.

In this embodiment of this application, the memory 1103 stores executable instructions. The processor 1101 executes the executable instructions to implement the foregoing communication method, for example, the communication method in the embodiment in FIG. 4. In other words, the memory 1103 stores instructions used to perform the communication method.

In a possible implementation, when the communication apparatus 110 is the first apparatus, the communication apparatus 110 is configured to perform steps performed by the first apparatus in the possible implementations of the foregoing method embodiments. For example, the processor 1101 is configured to obtain the cyclic shift sequence. The cyclic shift sequence includes a delay domain cyclic shift and a Doppler domain cyclic shift. The processor 1101 is configured to send the cyclic shift sequence through the communication interface 1102.

The processor 1101 is specifically configured to determine the cyclic shift sequence based on a sequence length, a quadratic term coefficient, a preset maximum delay, and a preset maximum Doppler shift.

In another possible implementation, when the communication apparatus 110 is the second apparatus, the communication apparatus 110 is configured to perform steps performed by the first apparatus in the possible implementations of the foregoing method embodiments. For example, the processor 1101 is configured to receive the cyclic shift sequence through the communication interface 1102. The cyclic shift sequence includes a delay domain cyclic shift and a Doppler domain cyclic shift. The processor 1101 is configured to process the cyclic shift sequence.

When the communication apparatus 110 is a chip used in the terminal, the chip in the terminal implements a function of the terminal in the foregoing method embodiments. The chip in the terminal receives information from another module (for example, a radio frequency module or an antenna) in the terminal, where the information is sent by another terminal or a network device to the terminal. Alternatively, the chip in the terminal outputs information to another module (for example, a radio frequency module or an antenna) in the terminal, where the information is sent by the terminal to another terminal or a network device.

When the communication apparatus 110 is a chip used in the network device, the chip in the network device implements a function of the network device in the foregoing method embodiments. The chip in the network device receives information from another module (for example, a radio frequency module or an antenna) in the network device, where the information is sent by a terminal or another network device to the network device. Alternatively, the chip in the network device outputs information to another module (for example, a radio frequency module or an antenna) in the network device, where the information is sent by the network device to a terminal or another network device.

An embodiment of this application may further provide a computer program product. The computer program product includes computer instructions. When the instructions are run on at least one processor, the foregoing communication method, for example, the communication method in the embodiment in FIG. 4, is implemented.

In a possible implementation, the computer program product may be a software installation package or an image package. When the foregoing method needs to be used, the computer program product may be downloaded, and the computer program product is executed on a computing device.

An embodiment of this application may further provide a communication system. The communication system includes a terminal device and a network device. For specific descriptions, refer to the communication method shown in FIG. 4.

An embodiment of this application may further provide a computer program. The computer program is used to implement the foregoing communication method, for example, the communication method in the embodiment in FIG. 4.

An embodiment of this application further provides a computer-readable storage medium. The computer-readable storage medium includes instructions. The instructions are used to implement the foregoing communication method, for example, the communication method in the embodiment in FIG. 4.

The computer-readable storage medium may be any usable medium that can be stored by a communication apparatus, or a data storage device like a data center including one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive), or the like.

In embodiments of this application, the word like "example" or "for example" is used to give an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise specified, ordinal numbers such as "first" and "second" in embodiments of this application are intended to distinguish between a plurality of objects, but not to limit an order, a time sequence, priorities, or importance of the plurality of objects. For example, a first container storage management apparatus and a second container storage management apparatus are merely for ease of description, but do not indicate differences in apparatus structures, deployment sequences, importance degrees, and the like of the first container storage management apparatus and the first container storage management apparatus.

Persons of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A communication method, wherein the method comprises:

   obtaining, by a first apparatus, a cyclic shift sequence, wherein the cyclic shift sequence comprises a delay domain cyclic shift and a Doppler domain cyclic shift; and
   outputting the cyclic shift sequence.

2. The method according to claim 1, wherein the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

3. The method according to claim 2, wherein cyclic shift sequences with a same quadratic term coefficient in the quadratic exponential sequence set form zero ambiguity zone, and cyclic shift sequences with different quadratic term coefficients in the quadratic exponential sequence set form a low ambiguity zone.

4. The method according to any one of claims 1 to 3, wherein a discrete-time signal of the quadratic exponential sequence is:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, \ldots, N-1$$

wherein $s_{u,k,l}(n)$ is the quadratic exponential sequence, $N$ represents a sequence length, the sequence length is a composite number, u represents a quadratic term coefficient, the quadratic term coefficient comprises a prime factor of the sequence length, k represents an index of the delay cyclic shift, $l$ represents an index of the Doppler cyclic shift, $\Delta_{\mathrm{T}}$ represents a preset maximum delay, and $\Delta_{\mathrm{F}}$ represents a preset maximum Doppler shift.

5. The method according to any one of claims 2 to 4, wherein a value of the sequence length is equal to a product of $M$ mutually different prime numbers, and $M$ is a positive integer;

   the quadratic exponential sequence comprises sequences with the M mutually different prime numbers as quadratic term coefficients; and
   the quadratic exponential sequence set comprises $G$ sequence sets obtained by separately performing delay domain cyclic shifts and Doppler domain cyclic shifts on the sequences with the M mutually different prime numbers as quadratic term coefficients, wherein G is a positive integer.

6. The method according to claim 5, wherein when $M$ is equal to 2, the sequence length is equal to a first prime number multiplied by a second prime number;

   the quadratic exponential sequence comprises a first sequence with the first prime number as a quadratic term coefficient and a second sequence with the second prime number as a quadratic term coefficient; and
   the quadratic exponential sequence set comprises a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

7. The method according to claim 5, wherein when M is equal to 3, the sequence length is equal to a third prime number multiplied by a fourth prime number multiplied by a fifth prime number;

   the quadratic exponential sequence comprises a third sequence with the third prime number as a quadratic term coefficient, a fourth sequence with the fourth prime number as a quadratic term coefficient, and a fifth sequence with the fifth prime number as a quadratic term coefficient; and
   the quadratic exponential sequence set comprises a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

8. The method according to any one of claims 4 to 7, wherein obtaining, by the first apparatus, the cyclic shift sequence comprises:
   determining the cyclic shift sequence based on the sequence length, the quadratic term coefficient, the preset maximum delay, and the preset maximum Doppler shift.

9. The method according to claim 8, wherein the cyclic shift sequence is used to generate a random access signal or a sensing signal.

10. A communication method, wherein the method comprises:

    receiving, by a second apparatus, a cyclic shift sequence, wherein the cyclic shift sequence comprises a delay domain cyclic shift and a Doppler domain cyclic shift; and
    processing the cyclic shift sequence.

11. The method according to claim 10, wherein the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

12. The method according to claim 11, wherein sequence sets with a same quadratic term coefficient in the quadratic exponential sequence set form a zero ambiguity zone, and sequence sets with different quadratic term coefficients in the quadratic exponential sequence set form a low ambiguity zone.

13. The method according to any one of claims 10 to 12, wherein an expression of a discrete-time signal of the quadratic exponential sequence is:

$$s_{u,k,l}(n) = e^{-j\pi[u(n+k\Delta_T)(n+k\Delta_T+1)+2nl\Delta_F]/N}, n = 0, 1, ..., N-1$$

wherein $s_{u,k,l}(n)$ is the quadratic exponential sequence, $N$ represents a sequence length, the sequence length is a composite number, u represents a quadratic term coefficient, the quadratic term coefficient comprises a prime factor of the sequence length, $k$ represents an index of the delay cyclic shift, $l$ represents an index of the Doppler cyclic shift, $\Delta_T$ represents a preset maximum delay signal, and $\Delta_F$ represents a preset maximum Doppler shift.

14. The method according to claim 13, wherein a value of the sequence length is equal to a product of $M$ mutually different prime numbers, and $M$ is a positive integer;

the quadratic exponential sequence comprises sequences with the $M$ mutually different prime numbers as quadratic term coefficients; and
the quadratic exponential sequence set comprises $G$ sequence sets obtained by separately performing delay domain cyclic shifts and Doppler domain cyclic shifts on the sequences with the $M$ mutually different prime numbers as quadratic term coefficients, wherein $G$ is a positive integer.

15. The method according to claim 14, wherein when $M$ is equal to 2, the sequence length is equal to a first prime number multiplied by a second prime number;

the quadratic exponential sequence comprises a first sequence with the first prime number as a quadratic term coefficient and a second sequence with the second prime number as a quadratic term coefficient; and
the quadratic exponential sequence set comprises a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

16. The method according to claim 14, wherein when M is equal to 3, the sequence length is equal to a third prime number multiplied by a fourth prime number multiplied by a fifth prime number;

the quadratic exponential sequence comprises a third sequence with the third prime number as a quadratic term coefficient, a fourth sequence with the fourth prime number as a quadratic term coefficient, and a fifth sequence with the fifth prime number as a quadratic term coefficient; and
the quadratic exponential sequence set comprises a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

17. A communication system, wherein the communication system comprises a first apparatus and a second apparatus, wherein
the first apparatus is configured to perform the method according to any one of claims 1 to 9, and the second apparatus is configured to perform the method according to any one of claims 10 to 16.

18. A communication apparatus, wherein the communication apparatus comprises a communication unit and a processing unit, wherein

the processing unit is configured to obtain a cyclic shift sequence, wherein the cyclic shift sequence comprises a delay domain cyclic shift and a Doppler domain cyclic shift; and
the communication unit is configured to output the cyclic shift sequence.

19. The apparatus according to claim 18, wherein the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

20. The apparatus according to claim 19, wherein sequence sets with a same quadratic term coefficient in the quadratic exponential sequence set form a zero ambiguity zone, and sequence sets with different quadratic term coefficients in the quadratic exponential sequence set form a low ambiguity zone.

21. The apparatus according to any one of claims 18 to 20, wherein an expression of a discrete-time signal of the quadratic exponential sequence is:

$$s_{u,k,l}(n) = e^{-j\pi[u(n+k\Delta_T)(n+k\Delta_T+1)+2nl\Delta_F]/N}, n = 0, 1, ..., N-1$$

wherein $s_{u,k,l}(n)$ is the quadratic exponential sequence, $N$ represents a sequence length, the sequence length is a composite number, u represents a quadratic term coefficient, the quadratic term coefficient comprises a prime factor of the sequence length, k represents an index of the delay cyclic shift, $l$ represents an index of the Doppler cyclic shift, $\Delta_T$ represents a preset maximum delay, and $\Delta_F$ represents a preset maximum Doppler shift.

22. The apparatus according to any one of claims 18 to 21, wherein a value of the sequence length is equal to a product of M mutually different prime numbers, and M is a positive integer;

the quadratic exponential sequence comprises sequences with the $M$ mutually different prime numbers as quadratic term coefficients; and
the quadratic exponential sequence set comprises $G$ sequence sets obtained by separately performing delay domain cyclic shifts and Doppler domain cyclic shifts on the sequences with the $M$ mutually different prime numbers as quadratic term coefficients, wherein $G$ is a positive integer.

23. The apparatus according to claim 22, wherein when $M$ is equal to 2, the sequence length is equal to a first prime number multiplied by a second prime number;

the quadratic exponential sequence comprises a first sequence with the first prime number as a quadratic term coefficient and a second sequence with the second prime number as a quadratic term coefficient; and
the quadratic exponential sequence set comprises a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

24. The apparatus according to claim 22, wherein when $M$ is equal to 3, the sequence length is equal to a third prime number multiplied by a fourth prime number multiplied by a fifth prime number;

the quadratic exponential sequence comprises a third sequence with the third prime number as a quadratic term coefficient, a fourth sequence with the fourth prime number as a quadratic term coefficient, and a fifth sequence with the fifth prime number as a quadratic term coefficient; and
the quadratic exponential sequence set comprises a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

25. The apparatus according to any one of claims 21 to 24, wherein the processing unit is configured to determine the cyclic shift sequence based on the sequence length, the quadratic term coefficient, the preset maximum delay, and the preset maximum Doppler shift.

26. The apparatus according to claim 25, wherein the cyclic shift sequence is used to generate a random access signal or a sensing signal.

27. A communication apparatus, wherein the communication apparatus comprises a communication unit and a processing unit, wherein

    the communication unit is configured to receive a cyclic shift sequence, wherein the cyclic shift sequence comprises a delay domain cyclic shift and a Doppler domain cyclic shift; and
    the processing unit is configured to process the cyclic shift sequence.

28. The apparatus according to claim 27, wherein the cyclic shift sequence is a sequence in a quadratic exponential sequence set, and the quadratic exponential sequence set is a sequence set obtained by performing a delay domain cyclic shift and a Doppler domain cyclic shift on a quadratic exponential sequence.

29. The apparatus according to claim 28, wherein sequence sets with a same quadratic term coefficient in the quadratic exponential sequence set form a zero ambiguity zone, and form sequence sets with different quadratic term coefficients in the quadratic exponential sequence set a low ambiguity zone.

30. The apparatus according to any one of claims 27 to 29, wherein an expression of a discrete-time signal of the quadratic exponential sequence is:

$$s_{u,k,l}(n) = e^{-j\pi[u(n+k\Delta_{\mathrm{T}})(n+k\Delta_{\mathrm{T}}+1)+2nl\Delta_{\mathrm{F}}]/N}, n = 0, 1, ..., N-1$$

wherein $s_{u,k,l}(n)$ is the quadratic exponential sequence, $N$ represents a sequence length, the sequence length is a composite number, u represents a quadratic term coefficient, the quadratic term coefficient comprises a prime factor of the sequence length, k represents an index of the delay cyclic shift, $l$ represents an index of the Doppler cyclic shift, $\Delta_{\mathrm{T}}$ represents a preset maximum delay signal, and $\Delta_{\mathrm{F}}$ represents a preset maximum Doppler shift.

31. The apparatus according to 30, wherein a value of the sequence length is equal to a product of $M$ mutually different prime numbers, and $M$ is a positive integer;

    the quadratic exponential sequence comprises sequences with the $M$ mutually different prime numbers as quadratic term coefficients; and
    the quadratic exponential sequence set comprises $G$ sequence sets obtained by separately performing delay domain cyclic shifts and Doppler domain cyclic shifts on the sequences with the $M$ mutually different prime numbers as quadratic term coefficients, wherein $G$ is a positive integer.

32. The apparatus according to claim 31, wherein when $M$ is equal to 2, the sequence length is equal to a first prime number multiplied by a second prime number;

    the quadratic exponential sequence comprises a first sequence with the first prime number as a quadratic term coefficient and a second sequence with the second prime number as a quadratic term coefficient; and
    the quadratic exponential sequence set comprises a first sequence set obtained by performing a delay domain cyclic shift and a Doppler domain cyclic shift on the first sequence with the first prime number as a quadratic term coefficient, and a second sequence set obtained by performing a delay domain cyclic shift and a Doppler domain cyclic shift on the second sequence with the second prime number as a quadratic term coefficient.

33. The apparatus according to claim 31, wherein when $M$ is equal to 3, the sequence length is equal to a third prime number multiplied by a fourth prime number multiplied by a fifth prime number;

    the quadratic exponential sequence comprises a third sequence with the third prime number as a quadratic term coefficient, a fourth sequence with the fourth prime number as a quadratic term coefficient, and a fifth sequence with the fifth prime number as a quadratic term coefficient; and
    the quadratic exponential sequence set comprises a third sequence set obtained by performing a delay domain cyclic shift and a Doppler domain cyclic shift on the third sequence with the third prime number as a quadratic term coefficient, a fourth sequence set obtained by performing a delay domain cyclic shift and a Doppler domain cyclic shift on the fourth sequence with the fourth prime number as a quadratic term coefficient, and a fifth sequence set obtained by performing a delay domain cyclic shift and a Doppler domain cyclic shift on the fifth sequence with the fifth prime number as a quadratic term coefficient.

34. A communication apparatus, wherein the communication apparatus comprises a processor, and the processor causes the communication apparatus to implement the method according to any one of claims 1 to 18 by using instructions stored in a memory.

35. A computer-readable storage medium, wherein the computer-readable storage medium stores a computer program, and when the computer program runs on a processor, the method according to any one of claims 1 to 18 is performed.

36. A computer program product, wherein the computer program product comprises a computer program or instructions; and when the computer program or the instructions are executed, the method according to any one of claims 1 to 18 is performed.

37. A chip system, wherein the chip system comprises at least one processor and an interface circuit, the interface circuit and the at least one processor are interconnected through a line, and the processor is configured to implement the method according to any one of claims 1 to 18.

38. A communication system, comprising the communication apparatus according to any one of claims 18 to 26 and the communication apparatus according to claims 27 to 33.

Communication
system 100

Network
device 111

Terminal
device 104

Terminal
device 101

Terminal
device 102

Network
device 112

Terminal
device 103

FIG. 1

FIG. 2

FIG. 3

First apparatus

Second apparatus

Obtain a sequence length, a root index, a delay cyclic shift, a Doppler cyclic shift, a maximum delay, and a maximum Doppler

Step S401: Obtain a cyclic shift sequence

Step S402: Cyclic shift sequence

Step S402: Cyclic shift sequence

Target object

Step S403: Process the cyclic shift sequence

FIG. 4

FIG. 5

FIG. 6(a)

FIG. 6(b)

FIG. 7A

Cyclic prefix
(cyclic prefix)

Zadoff-Chu

Window
(window function)

Window
(window function)

$t$

$t$

FIG. 7B

FIG. 7C(a)

FIG. 7C(b)

FIG. 7C(c)

FIG. 7D(a)

FIG. 7D(b)

FIG. 8(a)

Velocity (22 km/h)

−64  −55  −45  −35  −25  −15  −5  0  5  12  22  32  42  52  62  63

$s_{127,0,6}$  $s_{127,0,5}$  $s_{127,0,4}$  $s_{127,0,3}$  $s_{127,0,2}$  $s_{127,0,1}$  $s_{127,0,0}$  $s_{127,0,11}$  $s_{127,0,10}$  $s_{127,0,9}$  $s_{127,0,8}$  $s_{127,0,7}$

40

61

Range (6 m)

FIG. 8(b)

EP 4 675 947 A1

FIG. 9(a)

FIG. 9(b)

FIG. 9(c)

FIG. 10

FIG. 11

## INTERNATIONAL SEARCH REPORT

| International application No. |
|---|
| **PCT/CN2023/082621** |

| A. | CLASSIFICATION OF SUBJECT MATTER |
|---|---|

H04J13/00(2011.01)i;  H04J13/14(2011.01)i

According to International Patent Classification (IPC) or to both national classification and IPC

| B. | FIELDS SEARCHED |
|---|---|

Minimum documentation searched (classification system followed by classification symbols)

IPC:H04J

Documentation searched other than minimum documentation to the extent that such documents are included in the fields searched

Electronic data base consulted during the international search (name of data base and, where practicable, search terms used)

CNTXT, CNABS, DWPI, VEN, WOTXT, USTXT, EPTXT, CJFD, CNKI, IEEE: 循环移位, 时延, 多普勒, 序列, 指数, 质数, 零模糊区, cyclic shift, delay, doppler, sequence, index, prime, Zero ambiguity zone

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112291168 A (SOUTHEAST UNIVERSITY) 29 January 2021 (2021-01-29) description, paragraphs [0005]-[0090], and figures 1-5 | 1, 10, 17-18, 27, 34-38 |
| X | CN 112003808 A (CHENGDU HUAWEI TECHNOLOGIES CO., LTD.) 27 November 2020 (2020-11-27) description, paragraphs [0067]-[0210], and figures 1-24 | 1, 10, 17-18, 27, 34-38 |
| A | CN 113765633 A (HUAWEI TECHNOLOGIES CO., LTD.) 07 December 2021 (2021-12-07) entire document | 1-38 |
| A | US 2011158104 A1 (TELEFONAKTIEBOLAGET LM ERICSSON (PUBL)) 30 June 2011 (2011-06-30) entire document | 1-38 |

| ☐ Further documents are listed in the continuation of Box C. | ☑ See patent family annex. |
|---|---|

| Date of the actual completion of the international search | Date of mailing of the international search report |
|---|---|
| **07 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/082621** |

| Patent document cited in search report | | | Publication date (day/month/year) | Patent family member(s) | | | Publication date (day/month/year) |
| --- | --- | --- | --- | --- | --- | --- | --- |
| CN | 112291168 | A | 29 January 2021 | CN | 112291168 | B | 16 August 2022 |
| CN | 112003808 | A | 27 November 2020 | CN | 112003808 | B | 28 December 2021 |
| | | | | WO | 2020238573 | A1 | 03 December 2020 |
| CN | 113765633 | A | 07 December 2021 | WO | 2021244254 | A1 | 09 December 2021 |
| | | | | EP | 4152670 | A1 | 22 March 2023 |
| | | | | US | 2023103598 | A1 | 06 April 2023 |
| US | 2011158104 | A1 | 30 June 2011 | WO | 2010002303 | A1 | 07 January 2010 |
| | | | | EP | 2294887 | A1 | 16 March 2011 |
| | | | | EP | 2294887 | A4 | 29 November 2017 |
| | | | | EP | 2294887 | B1 | 20 March 2019 |
| | | | | US | 8824306 | B2 | 02 September 2014 |
| | | | | MX | 2010012727 | A1 | 31 December 2010 |
| | | | | JP | 2011527133 | W | 20 October 2011 |

Form PCT/ISA/210 (patent family annex) (July 2022)